(19) Europäisches Patentamt
European Patent Office
Office européen des brevets

(11) **EP 4 787 848 A1**

(12) **EUROPEAN PATENT APPLICATION**
published in accordance with Art. 153(4) EPC

(43) Date of publication:
**05.08.2026 Bulletin 2026/32**

(21) Application number: **24878641.0**

(22) Date of filing: **12.08.2024**

(51) International Patent Classification (IPC):
*H04N 19/186* (2014.01)

(52) Cooperative Patent Classification (CPC):
**H04N 19/186; H04N 19/44; H04N 19/60**

(86) International application number:
**PCT/CN2024/111331**

(87) International publication number:
**WO 2025/081989 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.10.2023 CN 202311361171**

(71) Applicant: HUAWEI TECHNOLOGIES CO., LTD.
**Shenzhen 518129 (CN)**

(72) Inventors:
• MA, Yi
  Shenzhen, Guangdong 518129 (CN)
• WANG, Jing
  Shenzhen, Guangdong 518129 (CN)
• JIA, Panqi
  Shenzhen, Guangdong 518129 (CN)

(74) Representative: **Eisenführ Speiser
Patentanwälte Rechtsanwälte PartGmbB
Johannes-Brahms-Platz 1
20355 Hamburg (DE)**

(54) **IMAGE ENCODING METHOD, IMAGE DECODING METHOD, AND RELATED DEVICE**

(57) This application relates to the encoding and decoding field and discloses an image encoding method, an image decoding method, and a related device. The image decoding method includes: obtaining first information based on a first bitstream; performing size transformation on the first information to obtain second information, where the second information includes information about a chrominance component in a first image format; reconstructing a first image based on the second information; obtaining third information based on the second bitstream, where sizes of the third information in spatial dimension and channel dimension are consistent with those of the first information; performing size transformation on the third information to obtain fourth information, where the fourth information includes information about a chrominance component in the second image format; and reconstructing a second image based on the fourth information. In this application, size transformation may be performed on information of same sizes in a decoding process to obtain information about chrominance components in different image formats, so that computational capability and time overheads are consistent in a process in which a decoding network performs decoding of the different image formats, thereby improving stability of information processing.

FIG. 7

701 Obtain first information based on a first bitstream

702 Perform size transformation on the first information to obtain second information, where the second information includes information about a chrominance component in a first image format

703 Reconstruct a first image based on the second information

704 Obtain third information based on a second bitstream, where sizes of the third information in spatial dimension and channel dimension are consistent with those of the first information

705 Perform size transformation on the third information to obtain fourth information, where the third information includes information about a chrominance component in a second image format, and the second image format is different from the first image format

706 Reconstruct a second image based on the fourth information

## Description

This application claims priority to Chinese Patent Application No. 202311361171.2, filed with the China National Intellectual Property Administration on October 18, 2023 and entitled "IMAGE ENCODING METHOD, IMAGE DECODING METHOD, AND RELATED DEVICE", which is incorporated herein by reference in its entirety.

## TECHNICAL FIELD

This application relates to the field of artificial intelligence, and in particular, to an image encoding method, an image decoding method, and a related device.

## BACKGROUND

Image/Video compression is a technology that uses data features such as spatial redundancy, visual redundancy, and statistical redundancy to represent images/videos with as few bits as possible in a lossy or lossless manner. This technology can implement effective transmission and storage of data information, and plays an important role in a current media era in which types of transmitted data are increasingly diversified and a data amount is increasingly large. Data compression is classified into lossy compression and lossless compression. The lossy compression achieves a large compression ratio at costs of a degree of image/video quality deterioration, while the lossless compression does not cause image/video quality loss.

Currently, JPEG AI can encode images in different formats such as YUV420, YUV444, and YUV422, by using different downsampling multiples. However, different formats greatly affect a computational capability of a current JPEG AI network.

## SUMMARY

This application provides an image encoding method and an image decoding method, so that computational capability and time overheads are consistent (or closely consistent, where a difference in the overheads is at least less than a difference in overheads for processing original information in different formats) when an encoding network or a decoding network processes information in different (or at least two) image formats, thereby improving stability of information processing.

According to a first aspect, this application provides an image encoding method. The method includes: obtaining first information, where the first information includes information about a chrominance component in a first image format; performing size transformation on the first information to obtain second information; encoding the second information by using an encoding network or a part of an encoding network; obtaining third information, where the third information includes information about a chrominance component in a second image format, and the second image format is different from the first image format; performing size transformation on the third information to obtain fourth information, where sizes of the fourth information in spatial dimension and channel dimension are consistent with those of the second information; and encoding the fourth information by using the encoding network or the part of the encoding network.

In an existing implementation, information about a chrominance component is directly input into an encoding network, and the encoding network encodes the information about the chrominance component. Because sizes of information in different image formats are different, that is, sizes of information input into the encoding network are different, computational capability and time overheads are different when the encoding network processes the information in the different image formats. As a result, stability of information processing is poor. In this embodiment of this application, information about chrominance components in different image formats is transformed into information of same sizes through size transformation, and the information is input into the encoding network, so that computational capability and time overheads are consistent (or closely consistent, where a difference in the overheads is at least less than a difference in overheads for processing original information in different formats) when the encoding network processes information in different (or at least two) image formats, thereby improving stability of information processing. This is better in terms of both machine-side experience and user-side experience.

In addition, in the conventional technology, if a model is trained for a low-resolution image format (for example, YUV420), the model has poor encoding performance for a high-resolution format (for example, YUV444). (If a normal 444 encoding model is required, another model needs to be separately trained.) In this embodiment of this application, one model trained at a time may be used to encode a plurality of formats, presenting good and stable encoding performance.

The encoding network may also be referred to as an analysis transform network.

In a possible implementation, a size of the second information in spatial dimension is less than that of the first information, and a size of the second information in channel dimension is greater than that of the first information; and a size of the fourth information in spatial dimension is less than or equal to that of the third information, and a size of the fourth information in channel dimension is greater than that of the third information.

In a possible implementation, an amount of non-redundant information included in the second information is consistent with an amount of non-redundant information included in the first information; and an amount of non-redundant information included in the fourth information is consistent with an amount of non-redundant information included in the third information.

In a possible implementation, information about chrominance components in different formats carries different amounts of information (for a low-resolution image format, because downsampling is performed, an amount of carried information is less than that of information in a high-resolution image format) due to different sizes. The amount of information herein refers to an amount of valid information, that is, an amount of non-redundant information. For example, if same information is replicated for a plurality of times, although an amount of information is increased, an amount of non-redundant information remains unchanged. In this embodiment of this application, the size transformation makes sizes of information about chrominance components in different (or at least two) image formats consistent, to maintain stability of operation overheads (including computational capability overheads or time overheads). However, a better case is as follows: Even if size transformation is performed on the information about the chrominance components, a bitstream obtained through an entire encoding process is consistent with a bitstream obtained through encoding before the size transformation. If the bitstreams are inconsistent, it is meaningless to use different image formats. To ensure that a result (namely, a bitstream) of the encoding process is consistent (closely consistent) with that of the existing solution, it needs to be ensured that an amount of valid information of the information remains unchanged before and after the size transformation.

In a possible implementation, the size transformation includes at least one of the following: performing information replication and using replicated information as information on a new channel; splitting information on at least one channel into information on a plurality of different channels; or performing a convolution operation.

In a possible implementation, the operation of splitting the information on the at least one channel into the information on the plurality of different channels is implemented by using a pixel unshuffle layer.

In a possible implementation, the first image format is a YUV444 format, and the second image format is a YUV422 format or a YUV420 format; or the first image format is a YUV422 format, and the second image format is a YUV420 format.

In a possible implementation, a number of channel dimensions of the second information and the fourth information is 8, a height dimension of the second information in spatial dimension is H/2, and a width dimension of the second information in spatial dimension is W/2, where H is a height dimension of a first image, and W is a width dimension of the first image.

In a possible implementation, the method further includes: obtaining fifth information, where the fifth information is information about a luminance component Y; performing size transformation on the fifth information to obtain sixth information, where a size of the sixth information in spatial dimension is consistent with that of the second information; and encoding the second information by using the encoding network or the part of the encoding network includes: encoding a fusion result of the second information and the fourth information by using the encoding network.

In a possible implementation, the first information or the third information further includes information about a luminance component.

According to a second aspect, this application provides an image decoding method. The method includes: obtaining first information based on a first bitstream; performing size transformation on the first information to obtain second information, where the second information includes information about a chrominance component in a first image format; reconstructing a first image based on the second information; obtaining third information based on a second bitstream, where sizes of the third information in spatial dimension and channel dimension are consistent with those of the first information; performing size transformation on the third information to obtain fourth information, where the fourth information includes information about a chrominance component in a second image format, and the second image format is different from the first image format; and reconstructing a second image based on the fourth information.

In an existing implementation, in a process in which a decoding network performs decoding of different (or at least two) image formats, the decoding network or an intermediate layer of the decoding network outputs information of different sizes, so that computational capability and time overheads are different in the process in which the decoding network performs decoding of the different (or at least two) image formats. As a result, stability of information processing is poor. In this embodiment of this application, a decoding network or an intermediate layer of a decoding network may output information of same sizes (a same size in channel dimension and a same size in spatial dimension), to obtain information about chrominance components in different image formats, so that computational capability and time overheads are consistent (or closely consistent) in a process in which the decoding network performs decoding of different (or at least two) image formats, thereby improving stability of information processing. This is better in terms of both machine-side experience and user-side experience.

The decoding network may also be referred to as a synthesis transform network.

In addition, there is no binding relationship between an input and an output. An input of YUV444 can generate both an output of 444 and an output of 420, or an output of 422. In addition, in this embodiment of this application, complexity of decoding 444 and 422 is almost the same as that of decoding 420, and is lower than complexity of decoding 444 and 422 by using original JPEG AI.

In a possible implementation, a size of the second information in spatial dimension is greater than that of the first information, a size of the second information in channel dimension is less than that of the first information, a size of the fourth information in spatial dimension is greater than or equal to that of the third information, and a size of the fourth information in channel dimension is less than that of the third information.

In a possible implementation, an amount of non-redundant information included in the second information is less than or equal to an amount of non-redundant information included in the first information; and an amount of non-redundant information included in the fourth information is less than or equal to an amount of non-redundant information included in the third information.

In a possible implementation, the size transformation includes at least one of the following manners: deleting information of a part of channels; combining different data of a plurality of channels onto a same channel; or performing a convolution operation.

In a possible implementation, the operation of combining the different data of the plurality of channels onto the same channel is implemented by using a pixel shuffle layer.

In a possible implementation, the first image format is a YUV444 format, and the second image format is a YUV422 format or a YUV420 format; or the first image format is a YUV422 format, and the second image format is a YUV420 format.

In a possible implementation, a number of channel dimensions of the first information is 8, a height dimension of the first information in spatial dimension is H/2, and a width dimension of the first information in spatial dimension is W/2, where H is a height dimension of the first image, and W is a width dimension of the first image.

In a possible implementation, the intermediate layer is a network layer before a last convolutional layer of the decoding network or a network layer before a last pixel shuffle layer of the decoding network.

According to a third aspect, this application provides an image encoding apparatus. The apparatus includes:

an obtaining module, configured to: obtain first information, where the first information includes information about a chrominance component in a first image format; and obtain third information, where the third information includes information about a chrominance component in a second image format, and the second image format is different from the first image format; and

a processing module, configured to: perform size transformation on the first information to obtain second information; encode the second information by using an encoding network or a part of an encoding network; perform size transformation on the third information to obtain fourth information, where sizes of the fourth information in spatial dimension and channel dimension are consistent with those of the second information; and encode the fourth information by using the encoding network.

In a possible implementation, a size of the second information in spatial dimension is less than that of the first information, and a size of the second information in channel dimension is greater than that of the first information; and a size of the fourth information in spatial dimension is less than or equal to that of the third information, and a size of the fourth information in channel dimension is greater than that of the third information.

In a possible implementation, an amount of non-redundant information included in the second information is consistent with an amount of non-redundant information included in the first information; and an amount of non-redundant information included in the fourth information is consistent with an amount of non-redundant information included in the third information.

In a possible implementation, the size transformation includes at least one of the following:

performing information replication and using replicated information as information on a new channel;

splitting information on at least one channel into information on a plurality of different channels; or performing a convolution operation.

In a possible implementation, the operation of splitting the information on the at least one channel into the information on the plurality of different channels is implemented by using a pixel unshuffle layer.

In a possible implementation, the first image format is a YUV444 format, and the second image format is a YUV422 format or a YUV420 format; or

the first image format is a YUV422 format, and the second image format is a YUV420 format.

In a possible implementation, a number of channel dimensions of the second information and the fourth information is 8, a height dimension of the second information in spatial dimension is H/2, and a width dimension of the second information in spatial dimension is W/2, where H is a height dimension of a first image, and W is a width dimension of the first image.

In a possible implementation, the obtaining module is further configured to:

obtain fifth information, where the fifth information is information about a luminance component Y;

the processing module is further configured to perform size transformation on the fifth information to obtain sixth information, where a size of the sixth information in spatial dimension is consistent with that of the second information; and

the processing module is specifically configured to encode a fusion result of the second information and the fourth information by using the encoding network.

In a possible implementation, the first information or the third information further includes information about a luminance component.

According to a fourth aspect, this application provides an image decoding apparatus. The apparatus includes:

an obtaining module, configured to: obtain first information based on a first bitstream; and obtain third information based on a second bitstream, where sizes of the third information in spatial dimension and channel dimension are consistent with those of the first information; and

a processing module, configured to: perform size transformation on the first information to obtain second information, where the second information includes information about a chrominance component in a first image format; reconstruct a first image based on the second information; perform size transformation on the third information to obtain fourth information, where the fourth information includes information about a chrominance component in a second image format, and the second image format is different from the first image format; and reconstruct a second image based on the fourth information.

In a possible implementation, a size of the second information in spatial dimension is greater than that of the first information, a size of the second information in channel dimension is less than that of the first information, a size of the fourth information in spatial dimension is greater than or equal to that of the third information, and a size of the fourth information in channel dimension is less than that of the third information.

In a possible implementation, an amount of non-redundant information included in the second information is less than or equal to an amount of non-redundant information included in the first information; and an amount of non-redundant information included in the fourth information is less than or equal to an amount of non-redundant information included in the third information.

In a possible implementation, the size transformation includes at least one of the following manners:

deleting information of a part of channels;

combining different data of a plurality of channels onto a same channel; or

performing a convolution operation.

In a possible implementation, the operation of combining the different data of the plurality of channels onto the same channel is implemented by using a pixel shuffle layer.

In a possible implementation, the first image format is a YUV444 format, and the second image format is a YUV422 format or a YUV420 format; or

the first image format is a YUV422 format, and the second image format is a YUV420 format.

In a possible implementation, a number of channel dimensions of the first information is 8, a height dimension of the first information in spatial dimension is H/2, and a width dimension of the first information in spatial dimension is W/2, where H is a height dimension of the first image, and W is a width dimension of the first image.

In a possible implementation, an intermediate layer is a network layer before a last convolutional layer of a decoding network or a network layer before a last pixel shuffle layer of a decoding network.

According to a fifth aspect, this application provides an image decoding method. The method includes: obtaining first information based on a first bitstream; performing size transformation on the first information to obtain one or more of second information, third information, or fourth information, where the second information is information about a chrominance component in a first image format, the third information is information about a chrominance component in a second image format, the fourth information is information about a chrominance component in a third image format, and the first image format, the second image format, and the third image format are different from each other; and performing one or more of the following steps: reconstructing a first image based on the second information; reconstructing a second image based on the third information; or reconstructing a third image based on the fourth information.

In an existing implementation, in a process in which a decoding network performs decoding of different (or at least two) image formats, the decoding network or an intermediate layer of the decoding network outputs information of different sizes, so that computational capability and time overheads are different in the process in which the decoding network performs decoding of the different (or at least two) image formats. As a result, stability of information processing is poor. In this embodiment of this application, a decoding network or an intermediate layer of a decoding network may output information of same sizes (a same size in channel dimension and a same size in spatial dimension), to obtain information about chrominance components in different image formats, so that computational capability and time overheads are consistent (or closely consistent) in a process in which the decoding network performs decoding of different (or at least two) image formats, thereby improving stability of information processing. This is better in terms of both machine-side experience and user-side experience.

In addition, for information (for example, the first information) obtained from a same bitstream, size transformation may be performed on the first information to generate information about chrominance in a plurality of image formats. In this way, there is no binding relationship between an input and an output. For example, an input of YUV444 can generate both an output of 444 and an output of 420, or an output of 422. In addition, in this embodiment of this application, complexity of decoding 444 and 422 is almost the same as that of decoding 420, and is lower than complexity of decoding 444 and 422 by using original JPEG AI.

In a possible implementation, a size of the second information, the third information, and the fourth information in spatial dimension is greater than or equal to that of the first information, and a size of the second information, the third information, and the fourth information in channel dimension is less than that of the first information.

In a possible implementation, an amount of non-redundant information included in the second information, the third information, and the fourth information is less than or equal to an amount of non-redundant information included in the first information.

In a possible implementation, the size transformation includes at least one of the following manners: deleting information of a part of channels; combining different data of a plurality of channels onto a same channel; or performing a convolution operation.

In a possible implementation, the operation of combining the different data of the plurality of channels onto the same channel is implemented by using a pixel shuffle layer.

In a possible implementation, the first image format is a YUV444 format, the second image format is a YUV422 format, and the third image format is a YUV420 format.

In a possible implementation, a number of channel dimensions of the first information is 8, a spatial dimension of the first information includes a height and a width, a height of the first information is H/2, and a width of the first information is W/2, where H is a height dimension of the first image, and W is a width dimension of the first image.

In a possible implementation, the intermediate layer is a network layer before a last convolutional layer of the decoding network or a network layer before a last pixel shuffle layer of the decoding network.

According to a sixth aspect, this application provides an image decoding apparatus. The apparatus includes:

an obtaining module, configured to obtain first information based on a first bitstream; and
a processing module, configured to: perform size transformation on the first information to obtain one or more of second information, third information, or fourth information, where the second information is information about a chrominance component in a first image format, the third information is information about a chrominance component in a second image format, the fourth information is information about a chrominance component in a third image format, and the first image format, the second image format, and the third image format are different from each other; and perform one or more of the following steps:

reconstructing a first image based on the second information;
reconstructing a second image based on the third information; or
reconstructing a third image based on the fourth information.

It should be understood that the processing module described in the sixth aspect may have a capability of transforming information obtained from a same bitstream into information about chrominance in a plurality of image formats. When the processing model is run, one or more of the plurality of image formats may be selected based on a requirement (for example, user designation or device selection) for generation.

In a possible implementation, the first information is an output of a decoding network or an output of an intermediate layer of a decoding network.

In a possible implementation, a size of the second information, the third information, and the fourth information in spatial dimension is greater than or equal to that of the first information, and a size of the second information, the third information, and the fourth information in channel dimension is less than that of the first information.

In a possible implementation, an amount of non-redundant information included in the second information, the third information, and the fourth information is less than or equal to an amount of non-redundant information included in the first information.

In a possible implementation, the size transformation includes at least one of the following manners: deleting information of a part of channels; combining different data of a plurality of channels onto a same channel; or performing a convolution operation.

In a possible implementation, the operation of combining the different data of the plurality of channels onto the same channel is implemented by using a pixel shuffle layer.

In a possible implementation, the first image format is a YUV444 format, the second image format is a YUV422 format, and the third image format is a YUV420 format.

In a possible implementation, a number of channel dimensions of the first information is 8, a spatial dimension of the first information includes a height and a width, a height of the first information is H/2, and a width of the first information is W/2, where H is a height dimension of the first image, and W is a width dimension of the first image.

In a possible implementation, the intermediate layer is a network layer before a last convolutional layer of the decoding network or a network layer before a last pixel shuffle layer of the decoding network.

According to a seventh aspect, this application provides an image decoding method. The method includes: obtaining first information based on a first bitstream; performing first size transformation on the first information to obtain second information, where the second information includes information about a chrominance component in a first image format; reconstructing a first image based on the second information; performing second size transformation on the first information to obtain third information, where the third information includes information about a chrominance component in a second image format, and the second image format is different from the first image format; and reconstructing a second image based on the third information.

In an existing implementation, in a process in which a decoding network performs decoding of different (or at least two) image formats, the decoding network or an intermediate layer of the decoding network outputs information of different sizes, so that computational capability and time overheads are different in the process in which the decoding network performs decoding of the different (or at least two) image formats. As a result, stability of information processing is poor. In this embodiment of this application, a decoding network or an intermediate layer of a decoding network may output information of same sizes (a same size in channel dimension and a same size in spatial dimension), to obtain information about chrominance components in different image formats, so that computational capability and time overheads are consistent (or closely consistent) in a process in which the decoding network performs decoding of different (or at least two) image formats, thereby improving stability of information processing. This is better in terms of both machine-side experience and user-side experience.

In addition, for information (for example, the first information) obtained from a same bitstream, size transformation may be performed on the first information to generate information about chrominance in a plurality of image formats. In this way, there is no binding relationship between an input and an output. For example, an input of YUV444 can generate both an output of 444 and an output of 420, or an output of 422. In addition, in this embodiment of this application, complexity of decoding 444 and 422 is almost the same as that of decoding 420, and is lower than complexity of decoding 444 and 422 by using original JPEG AI.

In a possible implementation, a size of the second information in spatial dimension is greater than that of the first information, a size of the second information in channel dimension is less than that of the first information, a size of the third information in spatial dimension is greater than or equal to that of the first information, and a size of the third information in channel dimension is less than that of the first information.

In a possible implementation, an amount of non-redundant information included in the second information is less than or equal to an amount of non-redundant information included in the first information; and an amount of non-redundant information included in the third information is less than or equal to the amount of non-redundant information included in the first information.

In a possible implementation, the size transformation includes at least one of the following manners: deleting information of a part of channels; combining different data of a plurality of channels onto a same channel; or performing a convolution operation.

In a possible implementation, the operation of combining the different data of the plurality of channels onto the same channel is implemented by using a pixel shuffle layer.

In a possible implementation, the first image format is a YUV444 format, and the second image format is a YUV422 format or a YUV420 format; or the first image format is a YUV422 format, and the second image format is a YUV420 format.

In a possible implementation, a number of channel dimensions of the first information is 8, a spatial dimension of the first information includes a height and a width, a height of the first information is H/2, and a width of the first information is W/2, where H is a height dimension of the first image, and W is a width dimension of the first image.

In a possible implementation, the intermediate layer is a network layer before a last convolutional layer of the decoding network or a network layer before a last pixel shuffle layer of the decoding network.

According to an eighth aspect, this application provides an image decoding apparatus. The apparatus includes:

an obtaining module, configured to obtain first information based on a first bitstream; and

a processing module, configured to: perform first size transformation on the first information to obtain second information, where the second information includes information about a chrominance component in a first image format; and reconstruct a first image based on the second information; or perform second size transformation on the first information to obtain third information, where the third information includes information about a chrominance component in a second image format, and the second image format is different from the first image format; and reconstruct a second image based on the third information.

It should be understood that the processing module described in the eighth aspect may have a capability of transforming information obtained from a same bitstream into information about chrominance in a plurality of image formats. When the processing model is run, one or more of the plurality of image formats may be selected based on a requirement (for example, user designation or device selection) for generation.

In a possible implementation, a size of the second information in spatial dimension is greater than that of the first information, a size of the second information in channel dimension is less than that of the first information, a size of the third information in spatial dimension is greater than or equal to that of the first information, and a size of the third information in channel dimension is less than that of the first information.

In a possible implementation, an amount of non-redundant information included in the second information is less than or equal to an amount of non-redundant information included in the first information; and an amount of non-redundant information included in the third information is less than or equal to the amount of non-redundant information included in the first information.

In a possible implementation, the size transformation includes at least one of the following manners: deleting information of a part of channels; combining different data of a plurality of channels onto a same channel; and performing a convolution operation.

In a possible implementation, the operation of combining the different data of the plurality of channels onto the same channel is implemented by using a pixel shuffle layer.

In a possible implementation, the first image format is a YUV444 format, and the second image format is a YUV422 format or a YUV420 format; or the first image format is a YUV422 format, and the second image format is a YUV420 format.

In a possible implementation, a number of channel dimensions of the first information is 8, a spatial dimension of the first information includes a height and a width, a height of the first information is H/2, and a width of the first information is W/2, where H is a height dimension of the first image, and W is a width dimension of the first image.

In a possible implementation, an intermediate layer is a network layer before a last convolutional layer of a decoding network or a network layer before a last pixel shuffle layer of a decoding network.

A ninth aspect of embodiments of this application provides an encoding device, including a processor. The processor is coupled to a memory, and the memory is configured to store a program or instructions. When the program or the instructions are executed by the processor, the encoding device is enabled to implement the method according to any one of the first aspect or the possible implementations of the first aspect.

A tenth aspect of embodiments of this application provides a decoding device, including a processor. The processor is coupled to a memory, and the memory is configured to store a program or instructions. When the program or the instructions are executed by the processor, the decoding device is enabled to implement the method according to any one of the second aspect or the possible implementations of the second aspect, the method according to any one of the fifth aspect or the possible implementations of the fifth aspect, or the method according to any one of the seventh aspect or the possible implementations of the seventh aspect.

An eleventh aspect of embodiments of this application provides an encoding and decoding system, including the encoding device according to the ninth aspect and/or the decoding device according to the tenth aspect.

A twelfth aspect of embodiments of this application provides a computer-readable medium. The computer-readable medium stores a computer program or instructions. When the computer program or the instructions are run on a computer, the computer is enabled to perform the method according to any one of the first aspect or the possible implementations of the first aspect, or the computer is enabled to perform the method according to any one of the second aspect or the possible implementations of the second aspect, the method according to any one of the fifth aspect or the possible implementations of the fifth aspect, or the method according to any one of the seventh aspect or the possible implementations of the seventh aspect.

A thirteenth aspect of embodiments of this application provides a computer program product. When the computer program product is executed on a computer, the computer is enabled to perform the method according to any one of the first aspect or the possible implementations of the first aspect, or the computer is enabled to perform the method according to any one of the second aspect or the possible implementations of the second aspect, the method according to any one of the fifth aspect or the possible implementations of the fifth aspect, or the method according to any one of the seventh aspect or the possible implementations of the seventh aspect.

A fourteenth aspect of embodiments of this application provides a readable storage medium. The readable medium stores a bitstream obtained through encoding using the method according to any one of the first aspect or the possible implementations of the first aspect.

A fifteenth aspect of embodiments of this application provides a bitstream storage device, including at least one storage medium and a communication interface, where the communication interface is configured to receive or send a bitstream; the at least one storage medium is configured to store the bitstream; and the bitstream is obtained by an encoder through encoding using the method according to any one of the first aspect or the possible implementations of the first aspect.

A sixteenth aspect of embodiments of this application provides a bitstream storage method. The method includes: receiving a bitstream through a communication interface; and storing the bitstream in one or more storage media, where the bitstream is obtained by an encoder through encoding using the method according to any one of the first aspect or the possible implementations of the first aspect.

A seventeenth aspect of embodiments of this application provides a bitstream distribution system. The system includes at least one storage medium and a video stream device. The at least one storage medium is configured to store a bitstream, and the bitstream is obtained by an encoder through encoding using the method according to any one of the first aspect or the possible implementations of the first aspect. The video stream device is configured to respond to a request of a decoder, so that a target bitstream in the at least one storage medium is sent to the decoder.

An eighteenth aspect of embodiments of this application provides a bitstream distribution method. The method includes: receiving a first request; selecting a target bitstream from at least one storage medium in response to the first request; and sending the target bitstream to a destination device. The at least one storage medium is configured to store a bitstream, and the bitstream is obtained by an encoder through encoding using the method according to any one of the first aspect or the possible implementations of the first aspect.

A nineteenth aspect of embodiments of this application provides a bitstream processing system. The system includes an image source device, an encoder device, one or more storage media, and a destination device. The image source device is configured to provide image data. The encoder device is configured to: obtain the image data of the image source device through an interface, and encode the image data to obtain one or more bitstreams, where the bitstream is obtained by the encoder through encoding using the method according to any one of the first aspect or the possible implementations of the first aspect. The encoder device is configured to store the one or more bitstreams in the one or more storage media. Alternatively, the encoder device is configured to encapsulate the one or more bitstreams to obtain a transmission bitstream. The encoder device is configured to transmit the transmission bitstream to the destination device through a communication link or a communication network. The destination device is configured to decapsulate the transmission bitstream, to obtain the one or more bitstreams. The destination device is configured to decode the one or more bitstreams, to obtain decoded data.

According to a twentieth aspect, this application provides a chip system. The chip system includes a processor, configured to support an apparatus in implementing a part or all of functions in the foregoing aspects, for example, sending or processing data or information in the foregoing methods. In a possible design, the chip system further includes a memory. The memory is configured to store program instructions and data that are necessary for a device or are of a device. The chip system may include a chip, or may include a chip and another discrete component.

**BRIEF DESCRIPTION OF DRAWINGS**

FIG. 1a is a diagram of an application scenario according to an embodiment of this application;
FIG. 1b is a diagram of an application scenario according to an embodiment of this application;
FIG. 2a illustrates an application scenario according to an embodiment of this application;
FIG. 2b illustrates an application scenario according to an embodiment of this application;
FIG. 3 illustrates an embodiment of an image processing method according to an embodiment of this application;
FIG. 4 illustrates an embodiment of an image processing method according to an embodiment of this application;
FIG. 5 illustrates an embodiment of an image processing method according to an embodiment of this application;
FIG. 6 illustrates an embodiment of an image processing method according to an embodiment of this application;
FIG. 7 illustrates an embodiment of an image processing method according to an embodiment of this application;
FIG. 8a illustrates an embodiment of an image processing method according to an embodiment of this application;
FIG. 8b illustrates an embodiment of an image processing method according to an embodiment of this application;
FIG. 9 illustrates an embodiment of an image processing method according to an embodiment of this application;
FIG. 10 illustrates an embodiment of an image processing method according to an embodiment of this application;
FIG. 11 illustrates an embodiment of an image processing method according to an embodiment of this application;
FIG. 12 is a diagram of a structure of an image encoding apparatus according to an embodiment of this application;

FIG. 13 is a diagram of a structure of an image decoding apparatus according to an embodiment of this application;

FIG. 14 is a diagram of a structure of a device according to an embodiment of this application; and

FIG. 15 is a diagram of a structure of a device according to an embodiment of this application.

## DESCRIPTION OF EMBODIMENTS

The following describes embodiments of the present invention with reference to accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of new scenarios, the technical solutions provided in embodiments of this application are also applicable to similar technical problems.

In the specification, claims, and accompanying drawings of this application, terms such as "first" and "second" are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include" and "have" and any variations thereof mean to cover non-exclusive inclusion, so that a process, method, system, product, or device that includes a series of units is not necessarily limited to those units, but may include other units not expressly listed or inherent to such a process, method, product, or device.

The following describes an application scenario to which a method provided in embodiments of this application is applicable.

The method provided in embodiments of this application may be applied to service scenarios such as a public cloud, a private cloud, video surveillance, a live streaming technology, storage, and transmission.

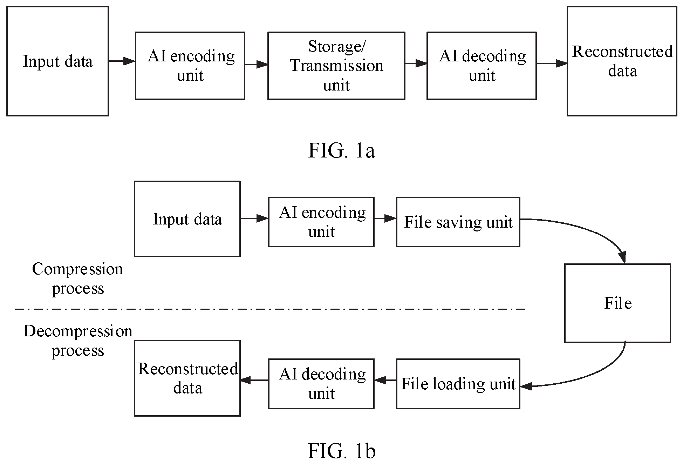

FIG. 1a shows an example of an application scenario according to an embodiment of this application. The application scenario may also be understood as an encoding and decoding application scenario. The application scenario includes an AI encoding unit, a storage/transmission unit, and an AI decoding unit. The method provided in embodiments of this application may be applied to the AI encoding unit/AI decoding unit.

The AI encoding unit is configured to encode input data (for example, an image or a video) according to an encoding method provided in embodiments of this application.

The storage/transmission unit is configured to store (for a terminal, video surveillance, a public cloud, a private cloud, or the like) or transmit (for a public cloud, a private cloud, a live streaming technology, or the like) the encoded input data.

The AI decoding unit is configured to decode the encoded input data according to a decoding method provided in embodiments of this application, to obtain reconstructed data (which may also be understood as data obtained by reconstructing an encoding feature of the input data).

There are a plurality of cases for the foregoing example application scenario, and the following provides detailed descriptions.

A first case is a storage application scenario.

The storage application scenario includes: a terminal album, video surveillance, or the like. FIG. 1b is a diagram of the scenario. The scenario includes an AI encoding unit, a file saving unit, a file loading unit, and an AI decoding unit.

The AI encoding unit is configured to encode input data (for example, an image or a video) according to an encoding method provided in embodiments of this application, to obtain a binary file.

The file saving unit is configured to save the binary file output by the AI encoding unit.

The file loading unit is configured to load the binary file.

The AI decoding unit is configured to decode the loaded binary file according to a decoding method provided in embodiments of this application, to obtain reconstructed data (which may also be understood as data obtained by reconstructing an encoding feature of the input data).

A second case is a terminal-cloud interaction scenario.

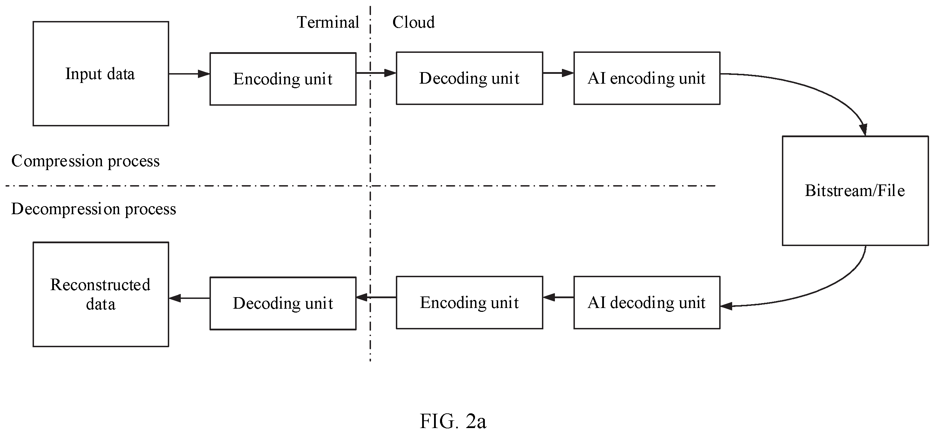

The terminal-cloud interaction scenario includes: a live streaming scenario, a public cloud, or the like. FIG. 2a is a diagram of the scenario. The scenario includes an encoding unit, a decoding unit, an AI encoding unit, an AI decoding unit, an encoding unit, and a decoding unit.

A terminal side includes the encoding unit and the decoding unit, and a cloud side includes the decoding unit, the encoding unit, the AI encoding unit, and the AI decoding unit.

A terminal obtains input data, and encodes the input data by using the encoding unit to obtain an encoding feature. The terminal sends the encoding feature to a cloud. After receiving the encoding feature, the cloud decodes the encoding feature by using the decoding unit, to obtain reconstructed data. Then, the reconstructed data is encoded by using the AI encoding unit according to an encoding method provided in embodiments of this application, to obtain a bitstream/file. The cloud decodes the bitstream/file by using the AI decoding unit according to a decoding method provided in embodiments of this application, to obtain reconstructed data. The cloud encodes the reconstructed data by using the encoding unit to obtain an encoding feature, and sends the encoding feature to the terminal. After receiving the encoding feature, the terminal decodes the encoding feature by using the decoding unit to obtain the reconstructed data.

It may be understood that encoding methods used by the encoding unit and the AI encoding unit in FIG. 2a may be inconsistent (or it is understood that operations of the decoding unit and the AI encoding unit in the cloud may be referred to as transcoding operations, and operations of the AI decoding unit and the encoding unit in the cloud may be referred to as transcoding operations). For example, the cloud usually has more abundant computational capability resources than the terminal. Therefore, an algorithm (AI encoding) that has a high computational capability requirement and higher compression efficiency may be used to compress (transcode) the input data again, to achieve a higher compression ratio and save storage space of the cloud. A transcoding process is as follows: Decoding is first performed, and then encoding is performed in another manner.

It may be understood that the foregoing several scenarios are merely examples. During actual application, there may be another scenario. This is not specifically limited herein.

The following describes a hardware structure of a chip according to an embodiment of this application.

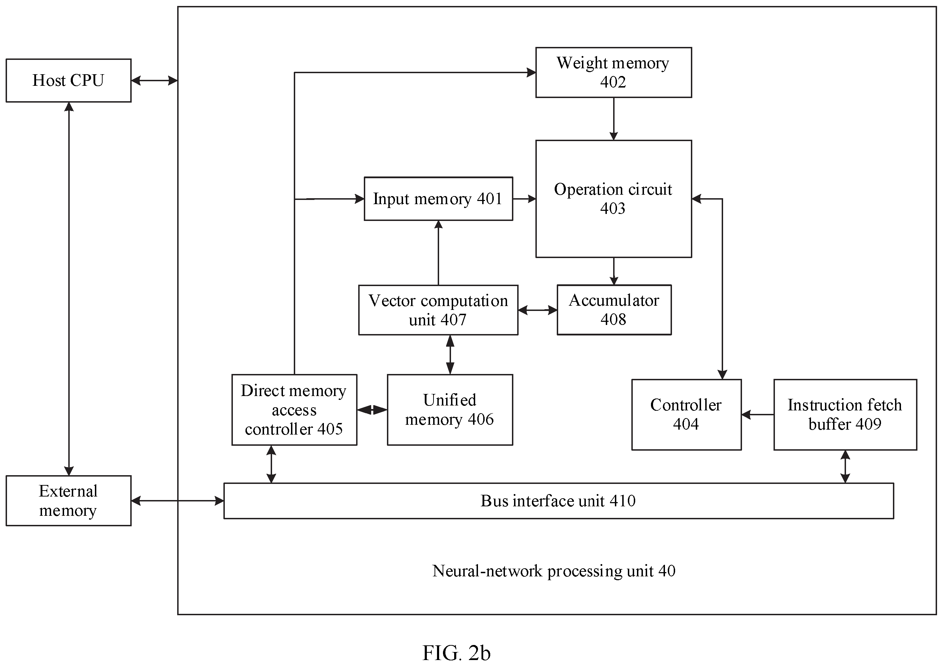

FIG. 2b shows a hardware structure of a chip according to an embodiment of the present invention. The chip includes a neural-network processing unit 40.

The neural-network processing unit 40 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The neural-network processing unit 40 serves as a coprocessor, and is mounted onto a host central processing unit (central processing unit, CPU) (host CPU). The host CPU assigns a task. A core part of the NPU is an operation circuit 403. A controller 404 controls the operation circuit 403 to extract data in a memory (a weight memory or an input memory) and perform an operation.

In some implementations, the operation circuit 403 internally includes a plurality of processing units (process engines, PEs). In some implementations, the operation circuit 403 is a two-dimensional systolic array. The operation circuit 403 may alternatively be a one-dimensional systolic array or another electronic circuit capable of performing mathematical operations such as multiplication and addition. In some implementations, the operation circuit 403 is a general-purpose matrix processor.

For example, it is assumed that there is an input matrix A, a weight matrix B, and an output matrix C. The operation circuit 403 fetches data corresponding to the matrix B from a weight memory 402, and buffers the data on each PE in the operation circuit. The operation circuit fetches data of the matrix A from an input memory 401, performs a matrix operation on the data of the matrix A and the matrix B, to obtain a partial result or a final result of the matrix, and stores the result in an accumulator 408.

A vector computation unit 407 may perform further processing on an output of the operation circuit, such as vector multiplication, vector addition, an exponential operation, a logarithmic operation, and size comparison. For example, the vector computation unit 407 may be configured to perform network computing, such as pooling (Pooling), batch normalization (Batch Normalization), or local response normalization (Local Response Normalization), at a non-convolutional/non-FC layer in a neural network.

In some implementations, the vector computation unit 407 stores a processed output vector in a unified memory 406. For example, the vector computation unit 407 may apply a non-linear function to the output, for example, a vector of an accumulated value, of the operation circuit 403 to generate an activation value. In some implementations, the vector computation unit 407 generates a normalized value, a merged value, or both. In some implementations, the processed output vector can be used as an activation input for the operation circuit 403, for example, for use in subsequent layers in the neural network.

The unified memory 406 is configured to store input data and output data.

For weight data, a direct memory access controller (direct memory access controller, DMAC) 405 directly transfers input data in an external memory to the input memory 401 and/or the unified memory 406, stores weight data in the external memory into the weight memory 402, and stores data in the unified memory 406 into the external memory.

A bus interface unit (bus interface unit, BIU) 410 is configured to implement interaction between the host CPU, the DMAC, and an instruction fetch buffer 409 through a bus.

The instruction fetch buffer (instruction fetch buffer) 409 connected to the controller 404 is configured to store instructions used by the controller 404.

The controller 404 is configured to invoke the instructions buffered in the instruction fetch buffer 409, to control an operating process of an operation accelerator.

Generally, the unified memory 406, the input memory 401, the weight memory 402, and the instruction fetch buffer 409 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

A method provided in embodiments of this application is described below. The method may be performed by an encoding device, or may be performed by a component (for example, a processor, a chip, or a chip system) of the encoding device. The encoding device may be a cloud device, or may be a terminal device. Certainly, the method may alternatively be performed by a system including a cloud device and a terminal device. Optionally, the method may be processed by a processor like a CPU, an NPU, or a GPU in the encoding device. This is not limited in this application.

Because embodiments of this application relate to massive applications of a neural network, for ease of understanding, the following first describes terms and concepts related to the neural network that may be used in embodiments of this application.

(1) Neural network

The neural network may include a neuron. The neuron may be an operation unit that uses $x_s$ and an intercept of 1 as inputs, where an output of the operation unit may be as follows:

$$h_{W,b}(x) = f(W^T x) = f\left(\sum_{s=1}^{n} W_s x_s + b\right),$$

where
s=1, 2, ..., n, n is a natural number greater than 1, $W_s$ is a weight of $x_s$, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of one neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN), also referred to as a multi-layer neural network, may be understood as a neural network having a plurality of hidden layers. The DNN is divided based on locations of different layers, and the neural network in the DNN may be classified into three types: an input layer, a hidden layer, and an output layer. Generally, a first layer is an input layer, a last layer is an output layer, and intermediate layers are all hidden layers. Layers are fully connected. To be specific, any neuron at an $i^{th}$ layer is necessarily connected to any neuron at an $(i+1)^{th}$ layer.

Although the DNN seems complex, it is actually not complex in terms of work at each layer. Simply speaking, the work at each layer is as the following linear relationship expression: $\vec{y} = \alpha(W \cdot \vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by merely performing such a simple operation on the input vector X. Because the DNN has a large number of layers, there are also a large number of coefficients W and offset vectors $\vec{b}$. Definitions of these parameters in the DNN are as follows: The coefficient W is used as an example. It is assumed that in a DNN having three layers, a linear coefficient from a $4^{th}$ neuron at a second layer to a $2^{nd}$ neuron at a third layer is defined as $W_{24}^3$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^L$.

It should be noted that there is no parameter W for the input layer. In the deep neural network, more hidden layers enable the network to be more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix (a weight matrix formed by vectors W at many layers) of all layers of the trained deep neural network.

(3) Convolutional neural network

The convolutional neural network (convolutional neuron network, CNN) is a deep neural network with a convolutional structure. The convolutional neural network includes a feature extractor that includes a convolutional layer and a subsampling layer, and the feature extractor may be considered as a filter. The convolutional layer is a neuron layer at which convolution processing is performed on an input signal and that is in the convolutional neural network. At the convolutional layer of the convolutional neural network, one neuron may be connected only to some adjacent-layer neurons. One convolutional layer usually includes several feature planes, and each feature plane may include some neurons that are in a rectangular arrangement. Neurons in a same feature plane share a weight, and the weight shared herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(4) Concatenation Concat

A concatenation operation is to concatenate a plurality of tensors in a specific dimension. All the tensors need to have a same shape (other than a concatenation dimension). In this patent, the concatenation operation means concatenation on a channel.

(5) Bit rate: indicates an average encoding length required for encoding a unit pixel in an image compression task.

(6) Rate-distortion performance: is an indicator used to measure performance of a compression algorithm. Both a bit rate and distortion of a decoded image are considered.

(7) YUV: is a color format. YUV and an RGB format can be converted into each other. YUV is usually applied to various media processing algorithms, to reduce a chrominance bandwidth. The following three YUV formats are commonly used:

YUV4:4:4 (YUV444): Complete sampling is performed on a chrominance component (UV), to obtain $Y[1, H, W]$, and $UV[2, H, W]$;

YUV4:2:2 (YUV422): 2:1 horizontal sampling and complete vertical sampling are performed on a chrominance component (UV), to obtain $Y[1, H, W]$, and $UV[2, H, W/2]$; and

YUV4:2:0 (YUV420): 2:1 horizontal sampling and 2:1 vertical sampling are performed on a chrominance component (UV), to obtain $Y[1, H, W]$, and $UV[2, H/2, W/2]$.

In addition to the YUV422 in a default format, the present invention also supports another possible YUV422 format: Complete horizontal sampling and 2:1 vertical sampling are performed on a chrominance component (UV), to obtain $Y[1, H, W]$, and $UV[2, H/2, W]$.

(8) Pixel shuffle Pixel Shuffle

The pixel shuffle is mainly used to obtain a high-resolution feature map from a low-resolution feature map through shuffle of a plurality of channels. In this specification, the pixel shuffle is written as $PS(s1, s2)$, where S1 and S2 refer to upsampling factors, and are usually integers greater than 1. $[C_{in}, h_{in}, w_{in}]$ is input, and $[C_{out}, h_{out}, w_{out}]$ is output, where $h_{out} = s1 \cdot h_{in}$; $w_{out} = s2 \cdot w_{in}$; and $C_{out} = C_{in} / (s1 \cdot s2)$, and $\lfloor \rfloor$ indicates rounding down. The formula is described as follows:

for $c = 0, \ldots, C_{out} - 1$, $i = 0, \ldots, h_{out} - 1$, and $j = 0, \ldots, w_{out} - 1$
for $i' = 0..s1 - 1$ and $j' = 0..s2 - 1$

$$output[c, i, j] = input[c * s1 * s2 + s2 * i' + j', \lfloor i/s1 \rfloor, \lfloor j/s2 \rfloor].$$

(9) Pixel unshuffle Pixel Unshuffle

The pixel unshuffle is an inverse operation of the pixel shuffle, and is mainly used to obtain a low-resolution feature map from a high-resolution feature map through shuffling of a plurality of channels. In this embodiment of this application, the pixel unshuffle is written as $UPS(s1, s2)$, where s1 and s2 refer to downsampling factors, and are usually integers greater than 1. $[C_{in}, h_{in}, w_{in}]$ is input, and $[C_{out}, h_{out}, w_{out}]$ is output, where $h_{out} = \frac{h_{in}}{s1}$; $w_{out} = \frac{w_{in}}{s2}$; and $C_{out} = C_{in}$

*s1 * s2. The formula is described as follows:

for $c = 0.. C_{in} - 1$, $i = 0.. h_{out} - 1$, and $j = 0..w_{out} - 1$
for $i' = 0..s1 - 1$ and $j' = 0..s2 - 1$

$$output[c * s1 * s2 + s2 * i' + j', i, j] = input[c, s1 * i + i', s2 * j + j']$$

(10) $s_{UV}$ and $s_Y$

Upsampling and downsampling factors: Downsampling factors are all used in an encoder, and upsampling factors are all used in a decoder. $s_{UV} = [s1, s2]$ represents that a vertical sampling multiple of UV is s1, a horizontal sampling multiple of the UV is s2, and both s1 and s2 are integers greater than or equal to 1. In JPEG AI, bilinear (bicubic) interpolation is used for upsampling, and (sample) interval sampling is used for downsampling. This application also supports upsampling and downsampling in other manners.

(11) Color transform (ColorTr)

Color transform is used to convert an input image into a primary component and a secondary component. Color transform that is used to convert an RGB picture into a YUV format and that is used in JPEG AI is specified in the international standard ITU-R BT.709. An input is three components: $R[H, W]$, $G[H, W]$, and $B[H, W]$, and spatial shapes of the input and an output are $H \times W$. The details are described as follows:

$$Y[i, j] = 0.2126 \cdot R[i, j] + 0.7152 \cdot G[i, j] + 0.0722 \cdot B[i, j]$$

$$U[i, j] = (-0.2126 \cdot R[i, j] - 0.7152 \cdot G[i, j] + 0.9278 \cdot B[i, j])/1.8556$$

$$V[i, j] = (0.7874 \cdot R[i, j] - 0.7152 \cdot G[i, j] - 0.0722 \cdot B[i, j])/1.5748$$

For the subscript $[i, j]$, $0 \leq i < H$, and $0 \leq j < W$.

(12) Inverse color transform (invColorTr): inverse transform of ColorTr.

Image/Video compression is a technology that uses data features such as spatial redundancy, visual redundancy, and statistical redundancy to represent images/videos with as few bits as possible in a lossy or lossless manner. This technology can implement effective transmission and storage of data information, and plays an important role in a current media era in which types of transmitted data are increasingly diversified and a data amount is increasingly large. Data compression is classified into lossy compression and lossless compression. The lossy compression achieves a large compression ratio at costs of a degree of image/video quality deterioration, while the lossless compression does not cause image/video quality loss.

Currently, JPEG AI can encode images in different formats such as YUV420, YUV444, and YUV422, by using different downsampling multiples. However, different formats greatly affect a computational capability of a current JPEG AI network.

Embodiments of this application first provide descriptions by using an example in which an application scenario is a terminal device.

For example, the terminal device may be a mobile phone, a tablet computer, a notebook computer, or an intelligent wearable device, and the terminal device may perform compression processing on an obtained picture. For another example, the terminal device may be a virtual reality (virtual reality, VR) device. For another example, embodiments of this application may also be applied to intelligent monitoring. A camera may be configured in the intelligent monitoring. In this case, in the intelligent monitoring, a to-be-compressed picture or the like may be obtained by using the camera. It should be understood that embodiments of this application may be further applied to other scenarios in which image compression needs to be performed. The other application scenarios are not enumerated one by one herein.

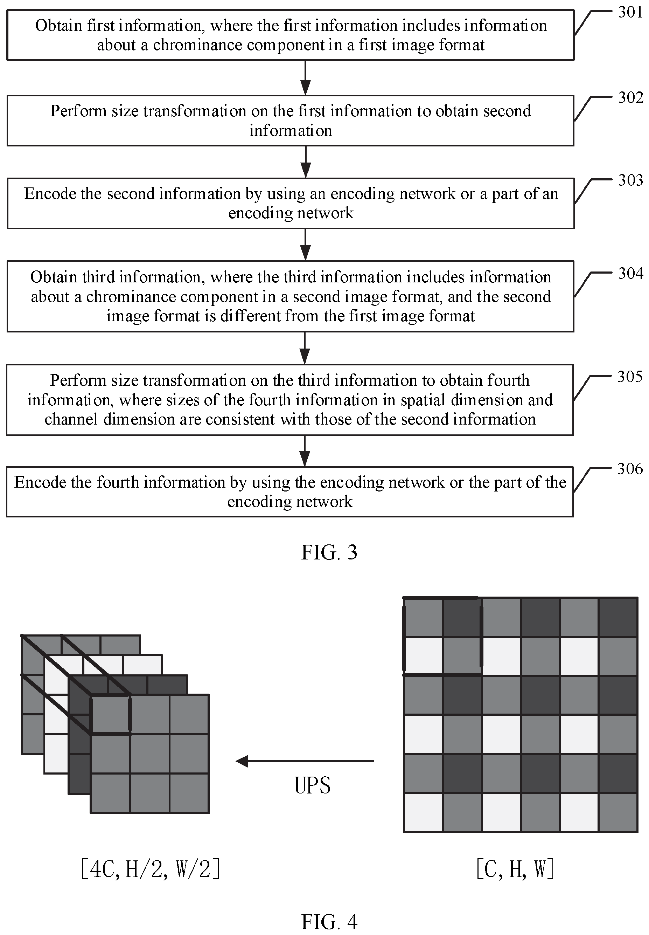

FIG. 3 illustrates an embodiment of an image encoding method according to an embodiment of this application. As shown in FIG. 3, the image encoding method provided in this embodiment of this application includes the following steps.

301: Obtain first information, where the first information includes information about a chrominance component in a first image format.

In this embodiment of this application, the first information may include information about a chrominance component that is in the first image format and that is of a first image.

**About the first image:**

In a possible implementation, the first image may be a to-be-encoded image. The first image may be an image photographed by a terminal device by using a camera, or the first image may be an image obtained from the terminal device (for example, an image stored in an album of the terminal device, or a picture obtained by the terminal device from a cloud). It should be understood that the first image may be an image that has an image encoding requirement. A source of the first image is not limited in this application.

**About information about the chrominance component:**

In a possible implementation, an input image (for example, the first image in this embodiment of this application) may be preprocessed, to convert the image into a primary component and a secondary component. The primary component may be a luminance component, and the secondary component may be a chrominance component. The primary component (namely, the luminance component) may be but is not limited to a component Y, and the secondary component (namely, the chrominance component) may be but is not limited to a component UV. For example, the component Y and the component UV may be obtained through division by using ColorTr. YUV is a type of a compiled true-color color space (color space), and Y'UV, YUV, YCbCr, YPbPr, and the like may all be referred to as YUV, and overlap with each other. "Y" represents luminance (Luminance or Luma), namely, a grayscale value. "U" and "V" represent chrominance (Chrominance or Chroma), which are used to describe a color and saturation of an image and specify a color of a pixel.

In this embodiment of this application, the first image is obtained, and the chrominance component and a luminance component are obtained by preprocessing the first image, or the chrominance component and a luminance component that correspond to the first image are directly obtained without obtaining the first image.

In a possible implementation, information about a chrominance component in an image format and information about a luminance component in the image format may be obtained. The image format may be a YUV444 format, a YUV422 format, or a YUV420 format.

For the YUV444 format, the secondary component of the first image may be directly used as the information about the chrominance component in the YUV444 format (for example, a size is [2, $H, W$], where H is a height of the first image, and W is a width of the first image).

For the YUV422 format, resampling (for example, downsampling) may be performed on the secondary component of the first image, to obtain the information about the chrominance component in the YUV422 format (for example, a size is [2, $H, W$/2], where H is a height of the first image, and W is a width of the first image).

For the YUV420 format, resampling (for example, downsampling) may be performed on the secondary component of the first image, to obtain the information about the chrominance component in the YUV420 format (for example, a size is [2, $H$/2, $W$/2], where H is a height of the first image, and W is a width of the first image).

In this embodiment of this application, the first information is the information about the chrominance component in the first image format, third information is information about a chrominance component in a second image format, and resolution of the first image format is higher than that of the second image format. For example, the first image format is the YUV444 format, the second image format is the YUV422 format or the YUV420 format; or the first image format is the YUV422 format, and the second image format is the YUV420 format.

302: Perform size transformation on the first information to obtain second information.

In a possible implementation, in this embodiment of this application, size transformation may be performed on information about chrominance components in different (or at least two) image formats, so that sizes of the information in spatial dimension are consistent and sizes of the information in channel dimension are consistent. For example, for the first information in the first image format and the third information in the second image format, size transformation may be separately performed, so that sizes of the transformed first information (namely, the second information) and the transformed third information (namely, fourth information) are consistent (namely, consistent channel sizes and consistent spatial sizes).

In an existing implementation, information about a chrominance component is directly input into an encoding network, and the encoding network encodes the information about the chrominance component. Because sizes of information in different image formats are different, that is, sizes of information input into the encoding network are different, computational capability and time overheads are different when the encoding network processes the information in the different image formats. As a result, stability of information processing is poor. In this embodiment of this application, information about chrominance components in different image formats is transformed into information of same sizes through size transformation, and the information is input into the encoding network, so that computational capability and time overheads are consistent (or closely consistent, where a difference in the overheads is at least less than a difference in overheads for processing original information in different formats) when the encoding network processes information in different (or at least two) image formats, thereby improving stability of information processing. This is better in terms of both machine-side experience and user-side experience.

The encoding network may also be referred to as an analysis transform network or a signal encoder (signal encoder). The encoder is implemented based on a neural network, and is configured to encode (or may be referred to as perform feature extraction on) input information to obtain a feature map. The feature map may be used to obtain a bitstream by using a quantization and entropy encoding module. Because the encoder is implemented based on the neural network, the encoder may also be referred to as an AI encoder.

In this embodiment of this application, the size transformation performed on the first information can reduce a size of the information in spatial dimension, and increase a size of the information in channel dimension. A size of the second information in spatial dimension is less than that of the first information, and a size of the second information in channel dimension is greater than that of the first information.

The spatial dimension may further include a height dimension and a width dimension, and that the size of the second information in spatial dimension is less than that of the first information may be understood as follows: A size of the second information in at least one of the height dimension and the width dimension is less than that of the first information (certainly, a size of the second information in one dimension in spatial dimension cannot be greater than that of the first information).

For example, the height dimension of the second information in spatial dimension is less than that of the first information, the width dimension of the second information in spatial dimension is less than that of the first information, and the size of the second information in channel dimension is greater than that of the first information.

For example, the height dimension of the second information in spatial dimension is less than that of the first information, the width dimension of the second information in spatial dimension is equal to that of the first information, and the size of the second information in channel dimension is greater than that of the first information.

The cases in the foregoing two examples may be understood as that the size of the second information in spatial dimension is less than that of the first information.

The following describes in detail the size transformation performed on the first information in this embodiment of this application.

In a possible implementation, information about chrominance components in different formats carries different amounts of information (for a low-resolution image format, because downsampling is performed, an amount of carried information is less than that of information in a high-resolution image format) due to different sizes. The amount of information herein refers to an amount of valid information, that is, an amount of non-redundant information. For example, if same information is replicated for a plurality of times, although an amount of information is increased, an amount of non-redundant information remains unchanged. The amount of non-redundant information is an amount of information that substantially affects an encoding result or a decoding result.

In this embodiment of this application, the size transformation makes sizes of information about chrominance components in different (or at least two) image formats consistent, to maintain stability of operation overheads (including computational capability overheads or time overheads). However, a better case is as follows: Even if size transformation is performed on the information about the chrominance components, a bitstream obtained through an entire encoding process is consistent with a bitstream obtained through encoding before the size transformation. If the bitstreams are inconsistent, it is meaningless to use different image formats. To ensure that a result (namely, a bitstream) of the encoding process is consistent (closely consistent) with that of the existing solution, it needs to be ensured that an amount of valid information of the information remains unchanged before and after the size transformation.

Specifically, for the second information obtained by performing the size transformation on the first information, an amount of non-redundant information included in the second information is consistent with an amount of non-redundant information included in the first information. The amount of information herein refers to an amount of valid information, that is, an amount of non-redundant information. For example, if same information is replicated for a plurality of times, although an amount of information is increased, an amount of non-redundant information remains unchanged.

The size transformation may include operations such as information splitting, information replication, and convolution. The following separately provides descriptions.

### 1. Information splitting

In a possible implementation, performing the size transformation on the first information may include: splitting information on at least one channel of the first information into information on a plurality of different channels. In other words, a part of information in the first information may be placed on an extended channel.

That is, to increase a number of channels of the first information and ensure that an overall amount of information remains unchanged, the channels of the first information may be extended, and information of an extended channel needs to come from existing data in the first information. In this case, a part of information in the first information may be taken out, the information is used as the information of the extended channel, and this part of information that is taken out is deleted from an original channel. This is equivalent to that the original information of the first information is split to obtain more channels, thereby reducing the size of the first information in spatial dimension.

Because a feature of the information about the chrominance component is that sizes of information on all channels are consistent, information of a same size may be taken out from information of each channel (because sizes of the information that is taken out are the same, sizes of information on all channels of the second information obtained by deleting this part of information are the same).

In a possible implementation, different data on a same channel in the first information may be placed on different newly-extended channels.

For example, a channel 1 of the first information (including the channel 1 and a channel 2) may include an element A1, an element A2, and an element A3.

The element A1, the element A2, and the element A3 may be deleted from the channel 1, and the element A1, the element A2, and the element A3 are used as data on a channel 3 (a channel originally not included in the first information).

Alternatively, the element A1, the element A2, and the element A3 may be deleted from the channel 1, the element A1 is used as data on a channel 3 (a channel originally not included in the first information), the element A2 is used as data on a channel 4 (a channel originally not included in the first information), and the element A3 is used as data on a channel 5 (a channel originally not included in the first information).

In a possible implementation, data on different channels in the first information may be taken out, combined, and placed on different newly-extended channels. In other words, data of a same newly-extended channel may come from different channels.

For example, a channel 1 of the first information (including the channel 1 and a channel 2) may include an element A1, an element A2, and an element A3, and the channel 2 may include an element B1, an element B2, and an element B3.

The element A1, the element A2, and the element A3 may be deleted from the channel 1, the element B1, the element B2, and the element B3 may be deleted from the channel 2, the element A1, the element A2, and the element A3 are used as data on a channel 3 (a channel not originally included in the first information), and the element B1, the element B2, and the element B3 are used as data on a channel 4 (a channel not originally included in the first information).

Alternatively, the element A1, the element A2, and the element A3 may be deleted from the channel 1, the element B1, the element B2, and the element B3 may be deleted from the channel 2, the elements A1 and B1 are used as data on a channel 3 (a channel originally not included in the first information), the elements A2 and B2 are used as data on a channel 4 (a channel not originally included in the first information), and the elements A3 and B3 are used as data on a channel 5 (a channel not originally included in the first information).

In a possible implementation, a size transformation manner may include pixel unshuffle (pixel unshuffle, UPS), that is, UPS may be performed on the first information.

FIG. 4 illustrates a processing result of UPS. In FIG. 4, an example in which information of each of C channels in the first information is extended to data of four channels is used for illustration, where data of an information block with a size of 2*2 (a height is 2 and a width is 2) is extended to data of four channels. In this case, a number of channels is also changed from C to 4C. If a spatial size of the first information is H*W, a number of channels of the second information obtained through the size transformation is H/2*W/2.

In a possible implementation, the first information is the information about the chrominance component in YUV444, the size of the first information in channel dimension is 2, the height dimension of the first information in spatial dimension is H, and the width dimension of the first information in spatial dimension is W; and a number of channel dimensions of the second information is 8, the height dimension of the second information in spatial dimension is H/2, and the width dimension of the second information in spatial dimension is W/2. A size transformation manner in this example may be the same as that shown in FIG. 4. Details are not described herein again.

## 2. Information replication

In a possible implementation, in addition to increasing the number of channels through information splitting, information replication may be further performed during size transformation. This manner is more necessary when the first information is in an image format with low resolution (at least not the highest resolution, for example, YUV422 and YUV420). This is because an information amount (namely, an information size) of information about a chrominance component in an image format with low resolution is less than that of information about a chrominance component in an image format with high resolution, when it is ensured that the amount of non-redundant information before and after the size transformation remains unchanged, if only operations such as information splitting that do not increase an amount of data (it should be understood that the amount of data and the amount of non-redundant information described above are not a same concept, the amount of data is a total amount of information included in the information, and both redundant information and the non-redundant information are counted) are performed, a size of the information about the chrominance component in the image format with low resolution (at least not the highest resolution) is definitely lower than a size of the information about the chrominance component in the image format with high resolution. In this case, a replication operation may be performed on the information about the chrominance component in the image format with low resolution (at least not the highest resolution), to increase the amount of data. Compared with data before replication, in the information obtained through replication, an amount of non-redundant information remains unchanged, only an amount of included data becomes larger (that is, a size becomes larger).

In a possible implementation, information (all or a part of the information) of the first information may be replicated, and the replicated information is used as information on a new channel. That the replicated information is used as the information on the new channel may be understood as follows: Compared with that before the replication, a number of channels increases, and data included on the newly added channel includes the replicated data.

In a possible implementation, information replication may be performed on the first information, the replicated information is used as information on a new channel, and information on at least one channel is split into information on a plurality of different channels. There is no limitation on a time sequence between the two operations. In addition, a number of each type of operation is not limited. For example, information replication is first performed, then information splitting is performed, and then replication is performed, provided that it is ensured that the amount of non-redundant information of the information remains unchanged and the information can be transformed to a size to which the information needs to be transformed. Types of the operations, quantities of the operations, a combination manner of the operations, and a sequence of the operations are not limited in embodiments of this application.

A sequence of placement on channels after replication is not limited in this application.

For example, information before replication is as follows based on a channel sequence: the channel 1, the channel 2, the channel 3, and the channel 4, and each of the channel 1, the channel 2, the channel 3, and the channel 4 may be replicated once, to obtain data of a new channel. If each replicated channel is used as a channel adjacently after a channel before replication, the following may be obtained: information of the channel 1, the channel 1, the channel 2, the channel 2, the channel 3, the channel 3, the channel 4, and the channel 4; or if each replicated channel is placed after channels of the first information according to a sequence relationship between channels before the replication, information of the channel 1, the channel 2, the channel 3, the channel 4, the channel 1, the channel 2, the channel 3, and the channel 4 may be obtained. A channel sequence between information of a new channel and information of an original channel is not limited in this application.

For example, in a possible implementation, the first information is the information about the chrominance component in YUV422, the size of the first information in channel dimension is 2, the height dimension of the first information in spatial dimension is H, the width dimension of the first information in spatial dimension is W/2, and the size may be described as (2,H,W/2); and a number of channel dimensions of the second information is 8, the height dimension of the second information in spatial dimension is H/2, and the width dimension of the second information in spatial dimension is W/2.

In this example, information splitting may be first performed on the first information (whose size is (2,H,W/2)) to obtain information whose size is (4,H/2,W/2), and then information replication is performed to obtain the second information (8,H/2,W/2); or in this example, information replication may be first performed on the first information (whose size is (2,H,W/2)) to obtain information whose size is (4,H,W/2), and then information splitting is performed to obtain the second information (8,H/2,W/2).

In a possible implementation, the foregoing operation of information replication or information splitting may be replaced with convolution.

In a possible implementation, size transformation may alternatively be performed in another manner, provided that it is ensured that the amount of non-redundant information of the information remains unchanged and the information can be transformed to a size to which the information needs to be transformed. This is not limited in this application.

It should be understood that, when the first information is the information about the chrominance component in YUV420, operations such as replication, splitting, and convolution may also be performed on the first information. This is described in subsequent embodiments.

303: Encode the second information by using an encoding network or a part of an encoding network.

**It should be understood that step 302 may be an operation independent of the encoding network, or may be implemented inside the encoding network, for example, may be performed by using an internal network layer close to an input of the encoding network. The following separately provides descriptions.**

### 1. Step 302 is the operation independent of the encoding network.

In a possible implementation, when step 302 is the operation independent of the encoding network, the second information may be encoded by using the encoding network. Compared with the conventional technology, step 302 is a step added before the encoding network.

**2. Step 302 is performed by using the network layer that is close to the input of the encoding network and**

**that is in the encoding network.**

In a possible implementation, when step 302 is performed by using the network layer that is close to the input of the encoding network and that is in the encoding network, the network layer that is close to the input of the encoding network and that is in the existing encoding network may be improved. For example, an operation value of a UPS layer or a convolutional layer is changed, and then the second information is an output of the network layer inside an analysis transform network.

In a possible implementation, when step 302 is performed by using the network layer that is close to the input of the encoding network and that is in the encoding network, the second information may be encoded by using the part of the encoding network (that is, a network connected after the improved network layer).

It should be understood that there is also information exchange between the information about the primary component (for example, the information about the component Y) and the information about the secondary component (for example, the information about the component UV), so that compression effect can be further improved.

In a possible implementation, the information exchange may be performed before the size transformation, or may be performed after the size transformation and before the input into the encoding network. The following separately provides descriptions.

## 1. Before the size transformation

In a possible implementation, the first information may further include information about a luminance component. In other words, the first information needs to include at least the information about the chrominance component, but the information about the luminance component may also be fused. For example, the first information may include a fusion result (for example, a concatenated result) of the information about the luminance component and the information about the chrominance component.

For example, the first information may include a fusion result (for example, a concatenated result) of the information about the luminance component and the information about the chrominance component in the YUV444 format.

For example, the first information may include a fusion result (for example, a concatenated result) of the information about the luminance component and the information about the chrominance component in the YUV422 format.

## 2. After the size transformation and before the input into the encoding network

In a possible implementation, the second information and the information about the luminance component may be fused (for example, concatenated), and a fusion result is input into the encoding network.

In a possible implementation, fusion is obtained through concatenation in channel dimension. Because the size of the second information is transformed compared with that of the first information, to fuse the second information and the information about the luminance component, the size of the information about the luminance component (namely, a fifth information in this embodiment of this application) may also be transformed, to obtain information (namely, a sixth information in this embodiment of this application) whose size is at least the same as that of the second information in spatial dimension, so that the second information and the sixth information can be concatenated in channel dimension.

Specifically, in a possible implementation, the fifth information may be obtained, where the fifth information is the information about the luminance component; and size transformation may be performed on the fifth information to obtain the sixth information. A size of the sixth information in spatial dimension is consistent with that of the second information. Further, a fusion result (for example, a concatenated result) of the second information and the fourth information may be encoded by using the encoding network.

304: Obtain third information, where the third information includes information about a chrominance component in a second image format, and the second image format is different from the first image format.

In this embodiment of this application, the third information may include the information about the chrominance component that is in the second image format and that is of a second image, and the second image may be different from or the same as the first image.

Resolution of the second image format may be lower than that of the first image format. For a description of step 304, refer to the description of step 301 in the foregoing embodiment. Similarities are not described herein again.

305: Perform size transformation on the third information to obtain fourth information, where sizes of the fourth information in spatial dimension and channel dimension are consistent with those of the second information.

In a possible implementation, the first image format is YUV444, the second image format is YUV422, a size of the fourth information in spatial dimension is less than that of the third information, and a size of the fourth information in channel dimension is greater than that of the third information.

For example, in a possible implementation, the third information is the information about the chrominance component in YUV422, the size of the third information in channel dimension is 2, a height dimension of the third information in spatial dimension is H, a width dimension of the third information in spatial dimension is W/2, and the size may be described as (2,H,W/2); and a number of channel dimensions of the fourth information is 8, a height dimension of the fourth information in spatial dimension is H/2, and a width dimension of the fourth information in spatial dimension is W/2.

In this example, information splitting may be first performed on the third information (whose size is (2,H,W/2)) to obtain information whose size is (4,H/2,W/2), and then information replication is performed to obtain the fourth information (8,H/2,W/2); or in this example, information replication may be first performed on the third information (whose size is (2,H,W/2)) to obtain information whose size is (4,H,W/2), and then information splitting is performed to obtain the fourth information (8,H/2,W/2).

In a possible implementation, the first image format is YUV422, the second image format is YUV420, a size of the fourth information in spatial dimension is equal to that of the third information, and a size of the fourth information in channel dimension is greater than that of the third information.

For example, in a possible implementation, the third information is the information about the chrominance component in YUV420, the size of the third information in channel dimension is 2, a height dimension of the third information in spatial dimension is H/2, a width dimension of the third information in spatial dimension is W/2, and the size may be described as (2,H/2,W/2); and a number of channel dimensions of the fourth information is 8, a height dimension of the fourth information in spatial dimension is H/2, and a width dimension of the fourth information in spatial dimension is W/2.

In this example, information replication may be performed on the third information (whose size is (2,H/2,W/2)) to obtain the information whose size is (8,H/2,W/2).

In a possible implementation, an amount of non-redundant information included in the fourth information is consistent with an amount of non-redundant information included in the third information.

306: Encode the fourth information by using the encoding network or the part of the encoding network.

For a description of step 306, refer to the description of step 303 in the foregoing embodiment. Similarities are not described herein again.

It should be understood that step 301 to step 303 are an encoding processing process of the first information, and step 304 to step 306 are an encoding processing process of the third information. A time sequence relationship between the encoding processing process of the first information and the encoding processing process of the second information is not limited in embodiments of this application. For example, step 301 to step 303 may be performed before step 304 to step 306, or step 301 to step 303 may be performed after step 304 to step 306, or step 301 to step 303 may be performed simultaneously with step 304 to step 306.

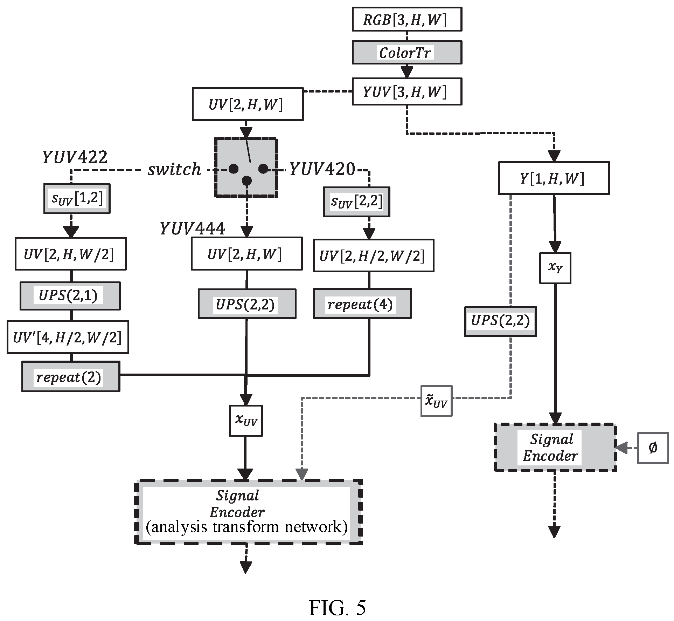

The following describes an image encoding method in an embodiment of this application with reference to FIG. 5. The method is described by using encoding processes of three image formats: YUV444, YUV422, and YUV420 as an example. In FIG. 5, information about a chrominance component and luminance information are exchanged after size transformation.

Refer to FIG. 5. The method includes the following.

An image in an RGB format is input. A size of the image is **[3, $H$, $W$]**, where 3 is a size of a channel dimension, H is a height dimension of a spatial dimension, and W is a width dimension of the spatial dimension.

The image in the RGB format is converted into information in a YUV444 format: YUV **[3, $H$, $W$]** through color transform ColorTr. YUV **[3, $H$, $W$]** may be divided into information about a chrominance component UV[2,H,W] and information about a luminance component $Y$[1, $H$, $W$].

Information processing for a component Y:

$x_Y$[1, $H$, $W$] is generated from $Y$[1, $H$, $W$] without downsampling, and is sent to an encoding network (Signal Encoder_Y) for encoding by the encoding network.

Processing for a component $UV$:

During one processing, one of the three formats may be selected.

YUV444 encoding: pixel unshuffle UPS(2,2) is performed on the input component UV **$UV$[2, $H$, $W$]** (a number of channels is 2, a height is H, and a width is W), to generate **$x_{UV}$[8, $H/2$, $W/2$]**. Auxiliary information $\bar{x}_{UV}$[4, $H$/2, $W/2$] (a consistent size in spatial dimension with **$x_{UV}$** is kept) is generated by performing UPS(2,2) on $Y$[1, $H$, $W$], and $\bar{x}_{UV}$ and **$x_{UV}$** are combined (concat) in channel dimension, and then are sent to a signal encoder_UV together.

The input component UV **$UV$[2, $H$, $W$]** may be the first information described in the foregoing embodiment, **$x_{UV}$**[8, $H/2$, $W/2$] may be the second information described in the foregoing embodiment, $Y$[1, $H$, $W$] may be the fifth information described in the foregoing embodiment, and the auxiliary information $\bar{x}_{UV}$[4, $H/2$, $W/2$] may be the sixth information described in the foregoing embodiment. For a description of obtaining the component UV $UV[2, H, W]$, refer to the description of step 301 in the foregoing embodiment. For a description of generating $x_{UV}[8, H/2, W/2]$ by performing pixel unshuffle UPS(2,2), refer to the description of step 302 in the foregoing embodiment. For a description of generating the auxiliary information $\tilde{x}_{UV}[4, H/2, W/2]$ (a consistent size in spatial dimension with $x_{UV}$ is kept) by performing UPS(2,2) on $Y[1, H, W]$, refer to the related description of the step of performing size transformation on the fifth information to obtain the sixth information in the foregoing embodiment. For a description that $\tilde{x}_{UV}$ and $x_{UV}$ are combined (concat) in channel dimension, and then are sent to the signal encoder_UV together, refer to the description of step 303 in the foregoing embodiment.

YUV420 encoding: Downsampling $s_{UV}=[2,2]$ is performed on the input component UV $UV[2, H, W]$ to generate $UV[2, H/2, W/2]$ in the 420 format. $x_{UV}[8, H/2, W/2]$ is generated through four-multiple replication repeat(4) ($cin_i$ is a channel before replication, $i$ is a number of the channel, and a channel after replication is $cout_{4i+j} = cin_i$, $i = 0{\sim}1$, $j = 0{\sim}3$) in channel dimension (because a number of pixels required by a unified shape $[8, H/2, W/2]$ of $x_{UV}$ is four multiples that of a current shape $[2, H/2, W/2]$). Auxiliary information $\tilde{x}_{UV}[4, H/2, W/2]$ (a consistent shape with $x_{UV}$ is kept) is generated by performing UPS(2,2) on $Y[1, H, W]$, and $\tilde{x}_{UV}$ and $x_{UV}$ are combined in channel dimension, and then are sent to a signal encoder together.

$UV[2, H/2, W/2]$ may be the third information described in the foregoing embodiment, $x_{UV}[8, H/2, W/2]$ may be the fourth information described in the foregoing embodiment, $Y[1, H, W]$ may be the fifth information described in the foregoing embodiment, and the auxiliary information $\tilde{x}_{UV}[4, H/2, W/2]$ may be the sixth information described in the foregoing embodiment. For a description of generating $UV[2, H/2, W/2]$ in the 420 format, refer to the description of step 304 in the foregoing embodiment. For a description of generating $x_{UV}[8, H/2, W/2]$ through four-multiple replication repeat(4) in channel dimension, refer to the description of step 305 in the foregoing embodiment. For a description of generating the auxiliary information $\tilde{x}_{UV}[4, H/2, W/2]$ (a consistent size in spatial dimension with $x_{UV}$ is kept) by performing UPS(2,2) on $Y[1, H, W]$, refer to the related description of the step of performing size transformation on the fifth information to obtain the sixth information in the foregoing embodiment. For a description that $\tilde{x}_{UV}$ and $x_{UV}$ are combined in channel dimension, and then are sent to the signal encoder together, refer to the description of step 306 in the foregoing embodiment.

An encoding process of YUV422 is as follows: Downsampling $s_{UV}=[1,2]$ is performed on $UV[2, H, W]$ to generate $UV[2, H, W/2]$ in the 422 format. $UV'[4, H/2, W/2]$ is generated through UPS(2,1), and then $x_{UV}[8, H/2, W/2]$ is generated through twice replication repeat(2) ($cin_i$ is a channel before replication, $i$ is a number of the channel, and a channel after replication is $cout_{2i+j} = cin_i$, $i = 0{\sim}3$, $j = 0{\sim}1$) in channel dimension (because a number of pixels required by a unified shape $[8, H/2, W/2]$ of $x_{UV}$ is twice that of a current shape $[4, H/2, W/2]$). Auxiliary information $\tilde{x}_{UV}[4, H/2, W/2]$ (a consistent shape with $x_{UV}$ is kept) is generated by performing UPS(2,2) on $Y[1, H, W]$, and $\tilde{x}_{UV}$ and $x_{UV}$ are combined in channel dimension, and then are sent to a signal encoder_UV together.

The input component UV $UV[2, H, W/2]$ may be the first information described in the foregoing embodiment, $x_{UV}[8, H/2, W/2]$ may be the second information described in the foregoing embodiment, $Y[1, H, W]$ may be the fifth information described in the foregoing embodiment, and the auxiliary information $\tilde{x}_{UV}[4, H/2, W/2]$ may be the sixth information described in the foregoing embodiment. For a description of obtaining the component UV $UV[2, H, W/2]$, refer to the description of step 301 in the foregoing embodiment. For descriptions of generating $UV'[4, H/2, W/2]$ through UPS(2,1), and generating $x_{UV}[8, H/2, W/2]$ through twice replication repeat(2) in channel dimension, refer to the description of step 302 in the foregoing embodiment. For a description of generating the auxiliary information $\tilde{x}_{UV}[4, H/2, W/2]$ (a consistent size in spatial dimension with $x_{UV}$ is kept) by performing UPS(2,2) on $Y[1, H, W]$, refer to the related description of the step of performing size transformation on the fifth information to obtain the sixth information in the foregoing embodiment. For a description that $\tilde{x}_{UV}$ and $x_{UV}$ are combined (concat) in channel dimension, and then are sent to the signal encoder_UV together, refer to the description of step 303 in the foregoing embodiment.

$UV[2, H, W/2]$ may be the third information described in the foregoing embodiment, $x_{UV}[8, H/2, W/2]$ may be the fourth information described in the foregoing embodiment, $Y[1, H, W]$ may be the fifth information described in the foregoing embodiment, and the auxiliary information $\tilde{x}_{UV}[4, H/2, W/2]$ may be the sixth information described in the foregoing embodiment. For a description of generating $UV[2, H, W/2]$ in the 422 format, refer to the description of step 304 in the foregoing embodiment. For descriptions of generating $UV'[4, H/2, W/2]$ through UPS(2,1) and generating $x_{UV}[8, H/2, W/2]$ through twice replication repeat(4) in channel dimension, refer to the description of step 305 in the foregoing embodiment. For a description of generating the auxiliary information $\tilde{x}_{UV}[4, H/2, W/2]$ (a consistent size in spatial dimension with $x_{UV}$ is kept) by performing UPS(2,2) on $Y[1, H, W]$, refer to the related description of the step of performing size transformation on the fifth information to obtain the sixth information in the foregoing embodiment. For a description that $\tilde{x}_{UV}$ and $x_{UV}$ are combined in channel dimension, and then are sent to the signal encoder together, refer to the description of step 306 in the foregoing embodiment.

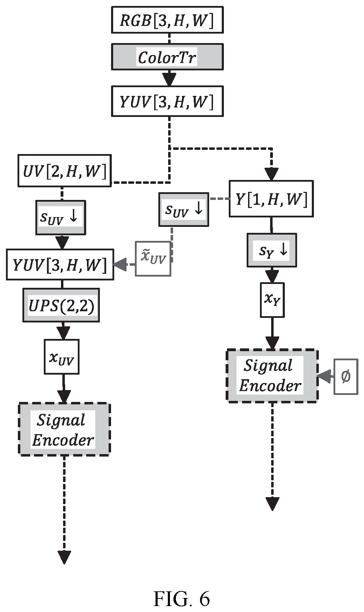

The following describes an image encoding method in an embodiment of this application with reference to FIG. 6. The method is described by using an encoding process of a YUV444 image format as an example. Different from FIG. 5, in FIG. 6, information about a chrominance component and luminance information are exchanged before size transformation.

Refer to FIG. 6. The method includes the following.

Information about a component Y and information about a component UV may be first combined by channel, and then UPS is performed. An input picture is in RGB [3, *H, W]*, and RGB is converted into in a 444 format YUV [3, *H, W]* through color transform ColorTr. If the input is in YUV444 format, this step is skipped.

Processing for information about the component Y:

$x_Y$[1, *H, W] is* generated from *Y[1, H, W]* without downsampling, and is sent to a signal encoder_Y.

Processing for information about the component *UV:*

Y[1, H, W] and **UV[2, *H, W]*** are combined in channel dimension to obtain YUV [3, H, W] , and $\boldsymbol{x_{UV}}$[12, H/2, *W/2]* is generated through UPS(2,2), and is sent to a signal encoder_UV.

In FIG. 6, for the step that the information about the component Y and the information about the component UV may be first combined by channel, and then the UPS is performed, refer to the description of information exchange between the information about the primary component and the information about the secondary component before the size transformation in the foregoing embodiment.

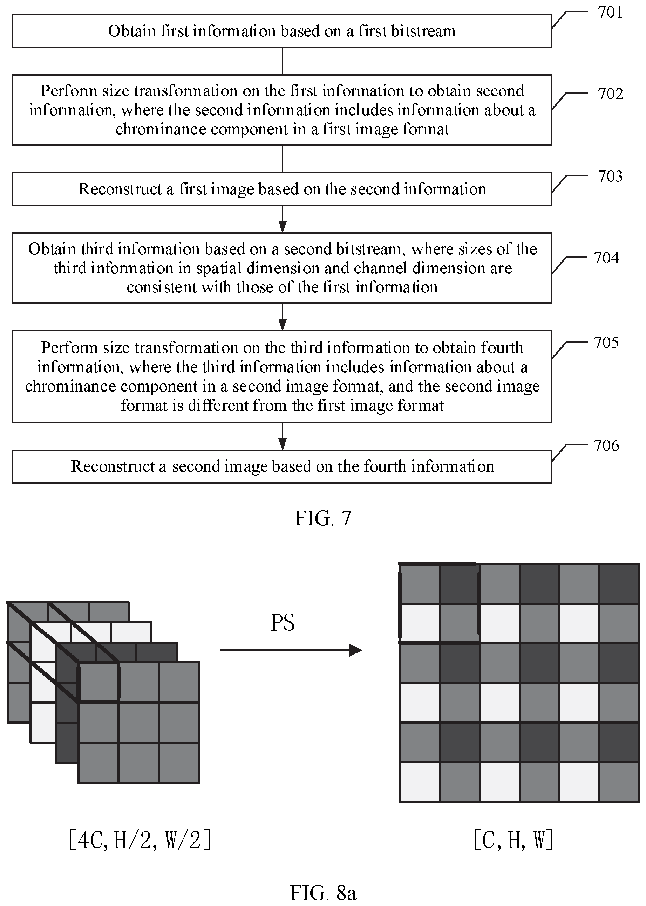

FIG. 7 illustrates an embodiment of an image decoding method according to an embodiment of this application. As shown in FIG. 7, the image decoding method provided in this embodiment of this application includes the following steps.

701: Obtain first information based on a first bitstream.

The first bitstream may be an encoding result obtained by encoding a first image.

The first information may be an output of a decoding network or an output of an intermediate layer of a decoding network.

On a decoder side, in a process in which the decoding network performs decoding of different image formats, the decoding network or the intermediate layer of the decoding network may output information of same sizes (a same size in channel dimension and a same size in spatial dimension). An output of the decoding network includes information about a chrominance component, an output of the intermediate layer of the decoding network is an intermediate quantity, and the information about the chrominance component or the intermediate quantity is the first information in this embodiment of this application.

In a possible implementation, in a process in which the decoding network performs decoding of different (or at least two) image formats, the decoding network or the intermediate layer of the decoding network may output information of same sizes (a same size in channel dimension and a same size in spatial dimension). In addition, to obtain information about chrominance components in different image formats, size transformation may be performed on the information, to obtain information that is about the chrominance components and that meet size requirements specified in corresponding image formats.

In an existing implementation, in a process in which a decoding network performs decoding of different (or at least two) image formats, the decoding network or an intermediate layer of the decoding network outputs information of different sizes, so that computational capability and time overheads are different in the process in which the decoding network performs decoding of the different (or at least two) image formats. As a result, stability of information processing is poor. In this embodiment of this application, the decoding network or the intermediate layer of the decoding network may output the information of the same sizes (the same size in channel dimension and the same size in spatial dimension), to obtain the information about the chrominance components in the different image formats, so that computational capability and time overheads are consistent (or closely consistent) in the process in which the decoding network performs decoding of the different (or at least two) image formats, thereby improving stability of information processing. This is better in terms of both machine-side experience and user-side experience.

In addition, there is no binding relationship between an input and an output. An input of YUV444 can generate both an output of 444 and an output of 420, or an output of 422. In addition, in this embodiment of this application, complexity of decoding 444 and 422 is almost the same as that of decoding 420, and is lower than complexity of decoding 444 and 422 by using original JPEG AI.

The decoding network may also be referred to as a signal decoder (signal decoder). The decoder is implemented based on a neural network, and is configured to decode (or may be referred to as perform feature reconstruction on) input information (for example, an entropy decoding result) to obtain information in YUV. Because the decoder is implemented based on the neural network, the decoder may also be referred to as an AI decoder.

702: Perform size transformation on the first information to obtain second information, where the second information includes information about a chrominance component in a first image format.

In this embodiment of this application, contrary to the embodiment corresponding to FIG. 3, the size transformation performed on the first information can increase a size of the information in spatial dimension (optionally, for information in a YUV420 format, the size in spatial dimension may remain unchanged), and decrease a size of the information in channel dimension. A size of the second information in spatial dimension is greater than or equal to that of the first information, and a size of the second information in channel dimension is less than that of the first information.

The spatial dimension may further include a height dimension and a width dimension, and that the size of the second information in spatial dimension is greater than that of the first information may be understood as follows: A size of the second information in at least one of the height dimension and the width dimension is greater than that of the first information (certainly, a size of the second information in one dimension in spatial dimension cannot be less than that of the first information).

For example, the height dimension of the second information in spatial dimension is greater than that of the first information, the width dimension of the second information in spatial dimension is greater than that of the first information, and the size of the second information in channel dimension is less than that of the first information.

For example, the height dimension of the second information in spatial dimension is greater than that of the first information, the width dimension of the second information in spatial dimension is equal to that of the first information, and the size of the second information in channel dimension is less than that of the first information.

The cases in the foregoing two examples may be understood as that the size of the second information in spatial dimension is greater than that of the first information.

**The following describes in detail the size transformation performed on the first information in this embodiment of this application.**

Through the size transformation in this embodiment of this application, information of same sizes can be transformed into information of sizes specified in corresponding image formats.

**The size transformation may include operations such as information merging, information selection, and convolution. The following separately provides descriptions.**

## 1. Information merging

In a possible implementation, performing the size transformation on the first information may include: combining different data of a plurality of channels onto a same channel.

That is, to reduce a number of channels of the first information and ensure that an overall amount of information remains unchanged, the channels of the first information may be reduced, and information of a reduced channel needs to be merged onto an existing channel in the first information. In this case, information of a part of channels in the first information may be taken out, and the information is merged with information of another channel, thereby reducing the size of the first information in channel dimension.

In a possible implementation, a size transformation manner may include pixel shuffle (pixel shuffle, PS), that is, UPS may be performed on the first information.

FIG. 8a illustrates a processing result of PS. In FIG. 8a, an example in which information of every four channels in 4C channels in the first information is merged into data of one channel is used for illustration, where four different pieces of data on same locations on the four channels are merged into the one channel. In this case, a number of channels is also changed from 4C to C. If a spatial size of the first information is H/2*W/2, a number of channels of the second information obtained through the size transformation is H*W.

In a possible implementation, the second information is the information about the chrominance component in YUV444, the size of the second information in channel dimension is 2, the height dimension of the second information in spatial dimension is H, and the width dimension of the second information in spatial dimension is W; and a number of channel dimensions of the first information is 8, the height dimension of the first information in spatial dimension is H/2, and the width dimension of the first information in spatial dimension is W/2. A size transformation manner in this example may be the same as that shown in FIG. 8a. Details are not described herein again.

## 2. Information selection

The selection is to select information of a part of channels in the first information, and then merge the information into new data whose size in spatial dimension remains unchanged but size in channel dimension decreases. This is equivalent to deleting information of an unselected channel, and only retaining information of a selected channel.

In a possible implementation, in addition to increasing the number of channels through information merging, information selection may be further performed during size transformation. This manner is more necessary when the second information is in an image format with low resolution (at least not the highest resolution, for example, YUV422 and YUV420). This is because an information amount (namely, an information size) of information about a chrominance component in an image format with low resolution is less than that of information about a chrominance component in an image format with high resolution, if only operations such as information merging that do not reduce an amount of data (it should be understood that the amount of data and an amount of non-redundant information described above are not a same concept, the amount of data is a total amount of information included in the information, and both redundant information and the non-redundant information are counted) are performed, a size of the information about the chrominance component in the image format with low resolution (at least not the highest resolution) is definitely lower than a size of the information about the chrominance component in the image format with high resolution. As a result, a size requirement specified in the image format cannot be met. In this case, when the information about the chrominance component in the image format with low resolution (at least not the highest resolution) is reconstructed, a selection operation may be performed on the first information, to reduce the amount of data. Compared with data before selection, in the information obtained through the selection operation, an amount of non-redundant information may also decrease.

In a possible implementation, information selection may be performed on the first information, and different data of a plurality of channels is combined onto a same channel. There is no limitation on a time sequence between the two operations. In addition, a number of each type of operation is not limited. For example, information selection is first performed, then information merging is performed, and then selection is performed, provided that the information can be transformed to a size to which the information needs to be transformed. Types of the operations, quantities of the operations, a combination manner of the operations, and a sequence of the operations are not limited in embodiments of this application.

For example, in a possible implementation, the second information is the information about the chrominance component in YUV422, the size of the second information in channel dimension is 2, the height dimension of the second information in spatial dimension is H, the width dimension of the second information in spatial dimension is W/2, and the size may be described as (2,H,W/2); and a number of channel dimensions of the first information is 8, the height dimension of the first information in spatial dimension is H/2, and the width dimension of the first information in spatial dimension is W/2.

In this example, information selection may be first performed on the first information (whose size is (8,H/2,W/2)) to obtain information whose size is (4,H/2,W/2), and then information merging is performed to obtain the second information (2,H,W/2); or in this example, information merging may be first performed on the first information (whose size is (8,H/2,W/2)) to obtain information whose size is (4,H,W/2), and then information selection is performed to obtain the second information (2,H,W/2).

In a possible implementation, the foregoing operation of information selection or information merging may be replaced with convolution.

In a possible implementation, size transformation may alternatively be performed in another manner, provided that it is ensured that the amount of non-redundant information of the information remains unchanged and the information can be transformed to a size to which the information needs to be transformed. This is not limited in this application.

**It should be understood that step 702 may be an operation independent of the decoding network, or may be implemented inside the decoding network, for example, may be performed by using an internal network layer close to an output of the decoding network (for example,** a network layer before a last convolutional layer of the decoding network or a network layer before a last pixel shuffle layer of the decoding network). **The following separately provides descriptions.**

### 1. Step 702 is the operation independent of the decoding network.

In a possible implementation, when step 702 is the operation independent of the decoding network, the decoding network may output the first information. Compared with the conventional technology, step 702 is a step added after the decoding network.

**2. Step 702 is performed by using the network layer that is close to the output of the decoding network and that is in the decoding network.**

In a possible implementation, when step 702 is performed by using the network layer that is close to the output of the decoding network and that is in the decoding network, the network layer that is close to the output of the decoding network and that is in the existing decoding network may be improved. For example, an operation value of the UPS layer or a convolutional layer is changed, and then the first information is an output of the network layer inside a synthesis transform network.

703: Reconstruct a first image based on the second information.

To be converted into RGB, upsampling, combination of information about a chrominance component and information about a luminance component, ICCI filtering, and generation of an RGB image by using a color transform module invColorTr may be further performed, but are not limited thereto.

704: Obtain third information based on a second bitstream, where sizes of the third information in spatial dimension and channel dimension are consistent with those of the first information.

The second bitstream may be an encoding result obtained by encoding a second image.

The third information may be an output of the decoding network or an output of the intermediate layer of the decoding network.

705: Perform size transformation on the third information to obtain fourth information, where the fourth information includes information about a chrominance component in a second image format, and the second image format is different from the first image format.

In a possible implementation, the first image format is a YUV444 format, and the second image format is a YUV422 format or a YUV420 format; or the first image format is a YUV422 format, and the second image format is a YUV420 format.

For a relationship between and descriptions of the first image format and the second image format, refer to the descriptions in the foregoing embodiment. Details are not described herein again.

In a possible implementation, a size of the fourth information in spatial dimension is greater than or equal to that of the third information, and a size of the fourth information in channel dimension is less than that of the third information.

In a possible implementation, an amount of non-redundant information included in the fourth information is consistent with an amount of non-redundant information included in the third information.

706: Reconstruct the second image based on the fourth information.

It should be understood that step 701 to step 703 are a decoding processing process of the first bitstream, and step 704 to step 706 are a decoding processing process of the second bitstream. A time sequence relationship between the decoding processing process of the first bitstream and the decoding processing process of the second bitstream is not limited in embodiments of this application. For example, step 701 to step 703 may be performed before step 704 to step 706, or step 701 to step 703 may be performed after step 704 to step 706, or step 701 to step 703 may be performed simultaneously with step 704 to step 306.

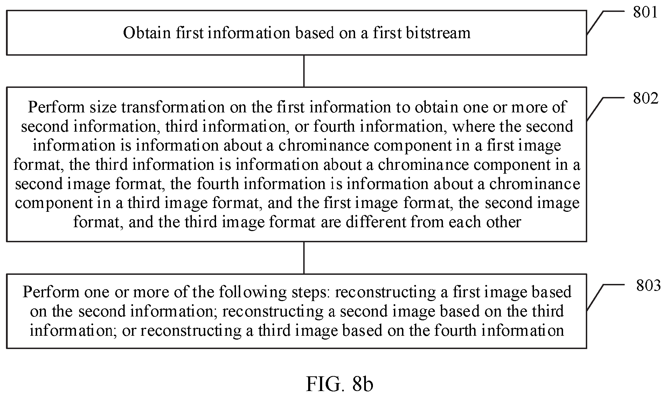

FIG. 8b illustrates an embodiment of an image decoding method according to an embodiment of this application. As shown in FIG. 8b, the image decoding method provided in this embodiment of this application includes the following steps.

801: Obtain first information based on a first bitstream.

The first information may be an output of a decoding network or an output of an intermediate layer of a decoding network.

On a decoder side, in a process in which the decoding network performs decoding of different image formats, the decoding network or the intermediate layer of the decoding network may output information of same sizes (a same size in channel dimension and a same size in spatial dimension). An output of the decoding network includes information about a chrominance component, an output of the intermediate layer of the decoding network is an intermediate quantity, and the information about the chrominance component or the intermediate quantity is the first information in this embodiment of this application.

In a possible implementation, in a process in which the decoding network performs decoding of different (or at least two) image formats, the decoding network or the intermediate layer of the decoding network may output information of same sizes (a same size in channel dimension and a same size in spatial dimension). In addition, to obtain information about chrominance components in different image formats, size transformation may be performed on the information, to obtain information that is about the chrominance components and that meet size requirements specified in corresponding image formats.

In an existing implementation, in a process in which a decoding network performs decoding of different (or at least two) image formats, the decoding network or an intermediate layer of the decoding network outputs information of different sizes, so that computational capability and time overheads are different in the process in which the decoding network performs decoding of the different (or at least two) image formats. As a result, stability of information processing is poor. In this embodiment of this application, the decoding network or the intermediate layer of the decoding network may output the information of the same sizes (the same size in channel dimension and the same size in spatial dimension), to obtain the information about the chrominance components in the different image formats, so that computational capability and time overheads are consistent (or closely consistent) in the process in which the decoding network performs decoding of the different (or at least two) image formats, thereby improving stability of information processing. This is better in terms of both machine-side experience and user-side experience.

In addition, for information (for example, the first information) obtained from a same bitstream, size transformation may be performed on the first information to generate information about chrominance in a plurality of image formats. In this way, there is no binding relationship between an input and an output. For example, an input of YUV444 can generate both an output of 444 and an output of 420, or an output of 422. In addition, in this embodiment of this application, complexity of decoding 444 and 422 is almost the same as that of decoding 420, and is lower than complexity of decoding 444 and 422 by using original JPEG AI.

An encoding synthesis transform network or a signal decoder (signal decoder) is implemented based on a neural network, and is configured to decode (or may be referred to as perform feature reconstruction on) input information (for example, an entropy decoding result) to obtain information in YUV. Because the decoder is implemented based on the neural network, the decoder may also be referred to as an AI decoder.

802: Perform size transformation on the first information to obtain one or more of second information, third information, or fourth information, where the second information is information about a chrominance component in a first image format, the third information is information about a chrominance component in a second image format, the fourth information is information about a chrominance component in a third image format, and the first image format, the second image format, and the third image format are different from each other.

For example, when scale transformation is performed, at least one of the following actions may be performed, to obtain information about chrominance in one or more image formats. In other words, in this embodiment of this application, for a same piece of information, information about chrominance in a plurality of image formats may be obtained in different size transformation manners, to reconstruct an image in a corresponding image format.

First size transformation is performed on the first information to obtain the second information, where the second information includes the information about the chrominance component in the first image format.

Second size transformation is performed on the first information to obtain the second information, where the second information includes the information about the chrominance component in the first image format.

Third size transformation is performed on the first information to obtain the second information, where the second information includes the information about the chrominance component in the first image format.

The second information is used as an example. In this embodiment of this application, contrary to the embodiment corresponding to FIG. 3, the size transformation performed on the first information can increase a size of the information in spatial dimension (optionally, for information in a YUV420 format, the size in spatial dimension may remain unchanged), and decrease a size of the information in channel dimension. A size of the second information in spatial dimension is greater than or equal to that of the first information, and a size of the second information in channel dimension is less than that of the first information.

The spatial dimension may further include a height dimension and a width dimension, and that the size of the second information in spatial dimension is greater than that of the first information may be understood as follows: A size of the second information in at least one of the height dimension and the width dimension is greater than that of the first information (certainly, a size of the second information in one dimension in spatial dimension cannot be less than that of the first information).

For example, the height dimension of the second information in spatial dimension is greater than that of the first information, the width dimension of the second information in spatial dimension is greater than that of the first information, and the size of the second information in channel dimension is less than that of the first information.

For example, the height dimension of the second information in spatial dimension is greater than that of the first information, the width dimension of the second information in spatial dimension is equal to that of the first information, and the size of the second information in channel dimension is less than that of the first information.

The cases in the foregoing two examples may be understood as that the size of the second information in spatial dimension is greater than that of the first information.

The following describes in detail the size transformation performed on the first information in this embodiment of this application.

Through the size transformation in this embodiment of this application, information of same sizes can be transformed into information of sizes specified in corresponding image formats.

The size transformation may include operations such as information merging, information selection, and convolution. The following separately provides descriptions.

### 1. Information merging

In a possible implementation, performing the size transformation on the first information may include: combining different data of a plurality of channels onto a same channel.

That is, to reduce a number of channels of the first information and ensure that an overall amount of information remains unchanged, the channels of the first information may be reduced, and information of a reduced channel needs to be merged onto an existing channel in the first information. In this case, information of a part of channels in the first information may be taken out, and the information is merged with information of another channel, thereby reducing the size of the first information in channel dimension.

In a possible implementation, a size transformation manner may include pixel shuffle (pixel shuffle, PS), that is, UPS may be performed on the first information.

FIG. 8a illustrates a processing result of PS. In FIG. 8a, an example in which information of four channels in the first information is merged into data of one channel is used for illustration, where four pieces of data on same locations on the four channels are merged into a data block of the one channel. In this case, a number of channels is also changed from four to one. If the number of channels of the first information is 4C, a number of channels of the second information obtained through the size transformation is C. If a spatial size of the first information is H/2*W/2, a number of channels of the second information obtained through the size transformation is H*W.

In a possible implementation, the second information is the information about the chrominance component in YUV444, the size of the second information in channel dimension is 2, the height dimension of the second information in spatial dimension is H, and the width dimension of the second information in spatial dimension is W; and a number of channel dimensions of the first information is 8, the height dimension of the first information in spatial dimension is H/2, and the width dimension of the first information in spatial dimension is W/2. A size transformation manner in this example may be the same as that shown in FIG. 8a. Details are not described herein again.

## 2. Information selection

The selection is to select information of a part of channels in the first information, and then merge the information into new data whose size in spatial dimension remains unchanged but size in channel dimension decreases. This is equivalent to deleting information of an unselected channel, and only retaining information of a selected channel.

In a possible implementation, in addition to increasing the number of channels through information merging, information selection may be further performed during size transformation. This manner is more necessary when the second information is in an image format with low resolution (at least not the highest resolution, for example, YUV422 and YUV420). This is because an information amount (namely, an information size) of information about a chrominance component in an image format with low resolution is less than that of information about a chrominance component in an image format with high resolution, if only operations such as information merging that do not reduce an amount of data (it should be understood that the amount of data and an amount of non-redundant data described above are not a same concept, the amount of data is a total amount of information included in the information, and both redundant data and the non-redundant data are counted) are performed, a size of the information about the chrominance component in the image format with low resolution (at least not the highest resolution) is definitely lower than a size of the information about the chrominance component in the image format with high resolution. As a result, a size requirement specified in the image format cannot be met. In this case, when the information about the chrominance component in the image format with low resolution (at least not the highest resolution) is reconstructed, a selection operation may be performed on the first information, to reduce the amount of data. Compared with data before selection, in the information obtained through the selection operation, an amount of non-redundant data may decrease.

In a possible implementation, information selection may be performed on the first information, and different data of a plurality of channels is combined onto a same channel. There is no limitation on a time sequence between the two operations. In addition, a number of each type of operation is not limited. For example, information selection is first performed, then information merging is performed, and then selection is performed, provided that it is ensured that the information can be transformed to a size to which the information needs to be transformed. Types of the operations, quantities of the operations, a combination manner of the operations, and a sequence of the operations are not limited in embodiments of this application.

For example, in a possible implementation, the second information is the information about the chrominance component in YUV422, the size of the second information in channel dimension is 2, the height dimension of the second information in spatial dimension is H, the width dimension of the second information in spatial dimension is W/2, and the size may be described as (2,H,W/2); and a number of channel dimensions of the first information is 8, the height dimension of the first information in spatial dimension is H/2, and the width dimension of the first information in spatial dimension is W/2.

In this example, information selection may be first performed on the first information (whose size is (8,H/2,W/2)) to obtain information whose size is (4,H/2,W/2), and then information merging is performed to obtain the second information (2,H,W/2); or in this example, information merging may be first performed on the first information (whose size is (8,H/2,W/2)) to obtain information whose size is (4,H,W/2), and then information selection is performed to obtain the second information (2,H,W/2).

In a possible implementation, the foregoing operation of information selection or information merging may be replaced with convolution.

In a possible implementation, size transformation may alternatively be performed in another manner, provided that it is ensured that the amount of non-redundant data of the information remains unchanged and the information can be transformed to a size to which the information needs to be transformed. This is not limited in this application.

**It should be understood that step 802 may be an operation independent of the decoding network, or may be implemented inside the decoding network, for example, may be performed by using an internal network layer close to an output of the decoding network (for example,** a network layer before a last convolutional layer of the decoding network or a network layer before a last pixel shuffle layer of the decoding network). **The following separately provides descriptions.**

### 1. Step 802 is the operation independent of the decoding network.

In a possible implementation, when step 802 is the operation independent of the decoding network, the decoding network may output the first information. Compared with the conventional technology, step 802 is a step added after the decoding network.

**2. Step 802 is performed by using the network layer that is close to the output of the decoding network and that is in the decoding network.**

In a possible implementation, when step 802 is performed by using the network layer that is close to the output of the decoding network and that is in the decoding network, the network layer that is close to the output of the decoding network and that is in the existing decoding network may be improved. For example, an operation value of the UPS layer or a convolutional layer is changed, and then the first information is an output of the network layer inside a synthesis transform network.

803: Perform one or more of the following steps: reconstructing a first image based on the second information; reconstructing a second image based on the third information; or reconstructing a third image based on the fourth information.

In a possible implementation, an image may be reconstructed based on at least one of the second information, the third information, or the fourth information.

To be converted into RGB, upsampling, combination of information about a chrominance component and information about a luminance component, ICCI filtering, and generation of an RGB image by using a color transform module invColorTr may be further performed, but are not limited thereto.

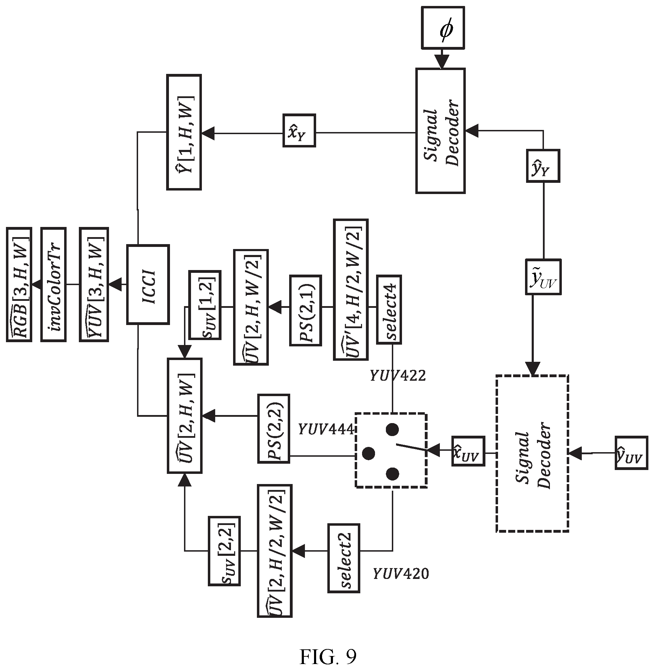

The following describes an image decoding method in an embodiment of this application with reference to FIG. 9. The method is described by using decoding processes of three image formats: YUV444, YUV422, and YUV420 as an example. In FIG. 9, size transformation is implemented by another module independent of a decoding network.

The decoding network (Signal Decoder) reconstructs Y and UV (namely, the first information in the embodiment corresponding to FIG. 7). A reconstructed UV feature has a unified shape [8, $H$/2, $W$/2], and then the UV feature with the unified shape is converted into different shapes of formats (YUV444, YUV420, and YUV422) by using pixel shuffle (PS).

Refer to FIG. 9. The method includes the following.

$\hat{x}_Y$[1, $H$, $W$] and $\hat{x}_{UV}$ [8, $H$/2, $W$ /2] are obtained.

Information processing for the component Y:
The signal decoder outputs $\hat{x}_Y$ [1, $H$, $W$]. Upsampling is not performed, to generate $\hat{Y}$[1, $H$, $W$].

Processing for the component $UV$:
During one processing, one of the three formats may be selected.

YUV420 decoding: The signal decoder outputs $\hat{x}_{UV}$ (the reconstructed component UV, where a shape of the reconstructed component is [8, $H$/2, $W$/2], where 8 represents a number of channels, and $H$/2, $W$/2 represent a height and a width, respectively). A quarter of channels are selected from $\hat{x}_{UV}$ (because a number of pixels of UV required by the 420 format is 1/4 of that required by the 444 format), namely, two channels (for example, channels with 0 divided by 4 are selected from channels 0 to 7), to generate $\widehat{UV}$ (whose shape is [2, $H$/2, $W$/2]). In this case, a picture in the YUV420 format can be output after combination with $\hat{Y}$ obtained in step 1. Further, for conversion into RGB, $\widehat{UV}$ needs to be upsampled for

$s_{UV}$ = [2,2] multiples to generate $\widehat{UV}[2, H, W]$ .

$\hat{x}_{UV}$ may be the first information described in the embodiment in FIG. 7, and $\widehat{UV}$ may be the second information described in the embodiment in FIG. 7. For a description of obtaining $\hat{x}_{UV}$ output by the signal decoder, refer to the descriptions of steps 701 and 704 in the foregoing embodiment. For an action of selecting the quarter of channels from $\hat{x}_{UV}$ to generate $\widehat{UV}$ , refer to the descriptions of steps 702 and 705 in the foregoing embodiment. For a description of conversion into RGB, refer to the descriptions of steps 703 and 706 in the foregoing embodiment.

YUV444 decoding: The signal decoder outputs $\hat{x}_{UV}$[8, $H$/2, $W$/2]. PS(2,2) is performed on $\hat{x}_{UV}$ to generate $\widehat{UV}[2, H, W]$ . In this case, a picture in the YUV444 format can be output after combination with $\hat{Y}$ obtained in step 1.

$\hat{x}_{UV}$ may be the first information described in the embodiment in FIG. 7, and $\widehat{UV}$ may be the second information described in the embodiment in FIG. 7. For a description of obtaining $\hat{x}_{UV}$ output by the signal decoder, refer to the descriptions of steps 701 and 704 in the foregoing embodiment. For an action of performing PS(2,2) on $\hat{x}_{UV}$ to generate $\widehat{UV}$ , refer to the descriptions of steps 702 and 705 in the foregoing embodiment. For a description of conversion into RGB, refer to the descriptions of steps 703 and 706 in the foregoing embodiment.

YUV422 decoding: The signal decoder outputs $\hat{x}_{UV}$[8, $H$/2, $W$/2]. One half of channels are selected from $\hat{x}_{UV}$ (because a number of pixels of UV required by the 422 format is 1/2 of that required by the 444 format), namely, four channels (for example, channels with 0 divided by 2 are selected from channels 0 to 7), to generate $\widehat{UV}'[2, H/2, W/2]$ ,

and PS(2,1) is performed to generate $\widehat{UV}[2, H, W/2]$ . In this case, a picture in the YUV422 format can be output after combination with $\hat{Y}$ obtained in step 1.

$\hat{x}_{UV}$ may be the first information described in the embodiment in FIG. 7, and $\widehat{UV}$ may be the second information described in the embodiment in FIG. 7. For a description of obtaining $\hat{x}_{UV}$ output by the signal decoder, refer to the descriptions of steps 701 and 704 in the foregoing embodiment. For an action of selecting the one half of channels from $\hat{x}_{UV}$ and generating $\widehat{UV}$ through PS(2,1), refer to the descriptions of steps 702 and 705 in the foregoing embodiment. For a description of conversion into RGB, refer to the descriptions of steps 703 and 706 in the foregoing embodiment.

Optionally, $\hat{Y}[1, H, W]$ and $\widehat{UV}[2, H, W]$ are combined by channel to generate $\widehat{YUV}[3, H, W]$. Optionally, when an ICCI filtering function is enabled in a configuration of JPEG AI, $\widehat{YUV}[3, H, W]$ is generated by separately performing ICCI filtering on $\hat{Y}[1, H, W]$ and $\widehat{UV}[2, H, W]$. $\widehat{RGB}[3, H, W]$ is generated from $\widehat{YUV}[3, H, W]$ by using a color transform module invColorTr.

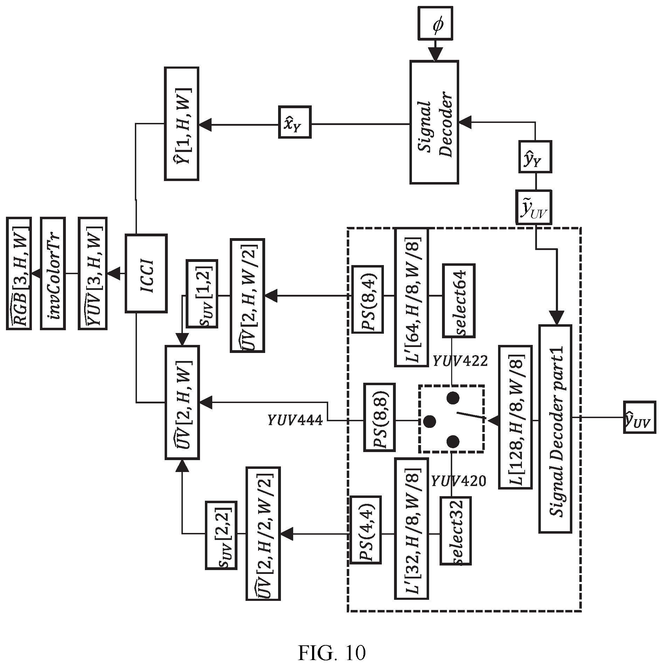

The following describes an image decoding method in an embodiment of this application with reference to FIG. 10. Different from FIG. 9, in FIG. 10, size transformation is implemented by using a pixel shuffle PS layer of a decoding network.

In an existing implementation, a last layer of the decoding network signal decoder is a pixel shuffle PS(4,4) layer, and may be combined with the size transformation PS in this embodiment of this application. In this embodiment, the size transformation operation and the last layer PS inside the signal decoder may be fused into one layer PS.

Refer to FIG. 10. The method includes the following.

Information processing for a component $Y$:
The signal decoder outputs $\hat{x}_Y[1, H, W]$. Upsampling is not performed, to generate $\hat{Y}[1, H, W]$.

Processing for a component $UV$:

During one processing, one of the three formats may be selected.

YUV420 decoding: A part1 (all layers except the last layer pixel shuffle) in the signal decoder outputs a feature $L$ [128, $H/8$, $W/8$]. 32 channels are selected from $L$ (channels with 0 divided by 4 are selected from channels 0 to 127) to generate $L'$ [32, $H/8$, $W/8$] (a number of pixels of UV required by a 420 format is a quarter of that required by a 444 format), and PS(4,4) is performed to generate $\widehat{UV}[2, H/2, W/2]$. In this case, a picture in the YUV420 format can be output after being combined with $\hat{Y}$ obtained in step 1. Further, for conversion into RGB, $\widehat{UV}$ needs to be upsampled for $s_{UV} = [2,2]$ multiples to generate $\widehat{UV}[2, H, W]$.

The feature $L$ may be the first information described in the embodiment in FIG. 7, and $\widehat{UV}$ may be the second information described in the embodiment in FIG. 7. For a description of obtaining the feature $L$ output by the part1 in the signal decoder, refer to the descriptions of steps 701 and 704 in the foregoing embodiment. For an action of selecting the 32 channels from $L$ and generating $\widehat{UV}$ through PS(4,4), refer to the descriptions of steps 702 and 705 in the foregoing embodiment. For a description of conversion into RGB, refer to the descriptions of steps 703 and 706 in the foregoing embodiment.

YUV444 decoding: A part1 (all layers except the last layer pixel shuffle) in the signal decoder outputs $L$ [128, $H/8$, $W/8$]. PS(8,8) is performed on $L$ to generate $\widehat{UV}[2, H, W]$. In this case, a picture in a YUV444 format can be output after combination with $\hat{Y}$ obtained in step 1.

The feature $L$ may be the first information described in the embodiment in FIG. 7, and $\widehat{UV}$ may be the second information described in the embodiment in FIG. 7. For a description of obtaining $L$ output by the signal decoder, refer to the descriptions of steps 701 and 704 in the foregoing embodiment. For an action of performing PS(8,8) on $\hat{x}_{UV}$ to generate $\widehat{UV}$, refer to the descriptions of steps 702 and 705 in the foregoing embodiment. For a description of conversion into RGB, refer to the descriptions of steps 703 and 706 in the foregoing embodiment.

YUV422 decoding: A part1 (all layers except the last layer pixel shuffle) in the signal decoder outputs $L$ [128, $H/8$, $W/8$]. 64 channels are selected from $L$ (channels with 0 divided by 2 are selected from channels 0 to 127) to generate $L'\left[64, \frac{H}{8}, \frac{W}{8}\right]$ (a number of pixels of UV required by a 422 format is one half of that required by a 444 format), and PS(8,4) is performed to generate $\widehat{UV}[2, H, W/2]$. In this case, a picture in the YUV422 format can be output after being combined with $\hat{Y}$ obtained in step 1. Further, for conversion into RGB, $\widehat{UV}$ needs to be upsampled for $s_{UV} = [1,2]$ multiples to generate $\widehat{UV}[2, H, W]$.

The feature $L$ may be the first information described in the embodiment in FIG. 7, and $\widehat{UV}$ may be the second information described in the embodiment in FIG. 7. For a description of obtaining L output by the signal decoder, refer to the descriptions of steps 701 and 704 in the foregoing embodiment. For an action of selecting the 64 channels from $L$ and generating $UV$ through PS(8,4), refer to the descriptions of steps 702 and 705 in the foregoing embodiment. For a description of conversion into RGB, refer to the descriptions of steps 703 and 706 in the foregoing embodiment.

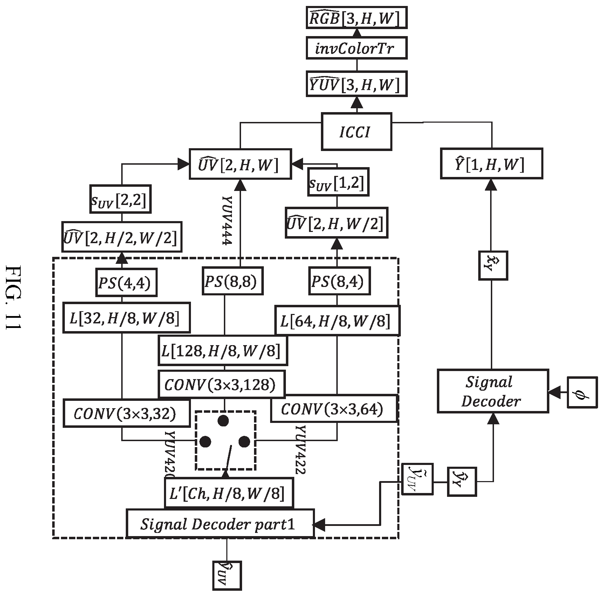

The following describes an image decoding method in an embodiment of this application with reference to FIG. 11. Different from FIG. 10, in FIG. 11, size transformation is implemented by a convolutional layer of a decoding network.

This embodiment describes a possible change to a structure of a decoder side. In this embodiment, a feature L reconstructed by a part1 of a decoder no longer has a unified number of channels, but the decoder signal decoder reconstructs L with different channels according to different required output formats. The part1 of the decoder includes all layers except a last pixel shuffle (PS) layer and a last convolutional layer.

Refer to FIG. 9. The method includes the following.

Information processing for a component Y:

The signal decoder outputs $\hat{x}_Y$ [1, $H$, $W$]. Upsampling is not performed, to generate $\hat{Y}$[1, $H$, $W$].

Processing for a component $UV$:

During one processing, one of the three formats may be selected.

YUV420 decoding: The part1 in the signal decoder outputs a feature $L'$ [$Ch$, $H$/8, $W$/8], and $L'$ [32, $H$/8, $W$/8] is generated by using a convolutional layer $CONV$(3×3,32) with 32 output channels. Then PS(4,4) is performed to generate

$\widehat{UV}[2, H/2, W/2]$ . In this case, a picture in a YUV420 format can be output after combination with $\hat{Y}$ obtained in step 1.

Further, for conversion into RGB, $UV$ needs to be upsampled for $s_{UV}$ = [2,2] multiples to generate $\widehat{UV}[2, H, W]$ .

$L'$ may be the first information described in the embodiment in FIG. 7, and $UV$ may be the second information described in the embodiment in FIG. 7. For a description of obtaining $L'$ output by the signal decoder, refer to the description of step 701 in the foregoing embodiment. For an action of generating $L'$ by using the convolutional layer $CONV$(3×3,32) with 32 output channels and generating $UV$ through PS(4,4), refer to the descriptions of steps 702 and 704 in the foregoing embodiment. For a description of conversion into RGB, refer to the descriptions of steps 703 and 705 in the foregoing embodiment.

YUV444 decoding: The part1 in the signal decoder outputs a feature $L'$ [$Ch$, $H$/8, $W$/8], and $L'$ [128, $H$/8, $W$/8] is generated by using a convolutional layer $CONV$(3×3,128) with 128 output channels. PS(8,8) is performed on $L$ to generate

$\widehat{UV}[2, H, W]$ . In this case, a picture in a YUV444 format can be output after combination with $\hat{Y}$ obtained in step 1.

$L'$ may be the first information described in the embodiment in FIG. 7, and $\widehat{UV}$ may be the second information described in the embodiment in FIG. 7. For a description of obtaining $L'$ output by the signal decoder, refer to the description of step 701 in the foregoing embodiment. For an action of performing by using the convolutional layer $CONV$ with 128 output channels and performing PS(8,8) to generate $\widehat{UV}$ , refer to the descriptions of steps 702 and 704 in the foregoing embodiment. For a description of conversion into RGB, refer to the descriptions of steps 703 and 705 in the foregoing embodiment.

YUV422 decoding: The part1 in the signal decoder outputs a feature $L'$[$Ch$, $H$/8, $W$/8], and $L'$ [64, $H$/8, $W$/8] is generated by using a convolutional layer $CONV$(3×3,64) with 64 output channels. PS(8,4) is performed to generate

$\widehat{UV}[2, H, W/2]$ . In this case, a picture in a YUV422 format can be output after combination with $\hat{Y}$ obtained in step 1.

Further, for conversion into RGB, $UV$ needs to be upsampled for $s_{UV}$ = [1,2] multiples to generate $\widehat{UV}[2, H, W]$ .

$L'$ may be the first information described in the embodiment in FIG. 7, and $UV$ may be the second information described in the embodiment in FIG. 7. For a description of obtaining $L'$ output by the signal decoder, refer to the description of step 701 in the foregoing embodiment. For an action of performing by using the convolutional layer $CONV$ with 64 output channels and performing PS(8,4) to generate $\widehat{UV}$ , refer to the descriptions of steps 702 and 704 in the foregoing embodiment. For a description of conversion into RGB, refer to the descriptions of steps 703 and 705 in the foregoing embodiment.

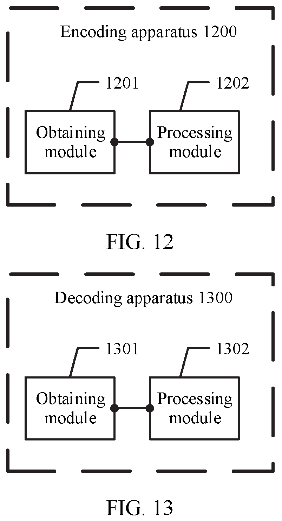

The foregoing describes the encoding and decoding methods in embodiments of this application. The following describes an apparatus 1200 in an embodiment of this application. Refer to FIG. 12. An embodiment of an encoding apparatus in an embodiment of this application includes the following modules.

An obtaining module 1201 is configured to: obtain first information, where the first information includes information about a chrominance component in a first image format; and obtain third information, where the third information includes information about a chrominance component in a second image format, and the second image format is different from the first image format.

For a description of the obtaining module 1201, refer to the descriptions of steps 301 and 304 in the foregoing embodiment. Details are not described herein again.

A processing module 1202 is configured to: perform size transformation on the first information to obtain second information; encode the second information by using an encoding network or a part of an encoding network; perform size transformation on the third information to obtain fourth information, where sizes of the fourth information in spatial dimension and channel dimension are consistent with those of the second information; and encode the fourth information by using the encoding network.

For a description of the processing module 1202, refer to the descriptions of steps 302, 303, 305, and 306 in the foregoing embodiment. Details are not described herein again.

In a possible implementation, a size of the second information in spatial dimension is less than that of the first information, and a size of the second information in channel dimension is greater than that of the first information; and a size of the fourth information in spatial dimension is less than or equal to that of the third information, and a size of the fourth information in channel dimension is greater than that of the third information.

In a possible implementation, an amount of non-redundant information included in the second information is consistent with an amount of non-redundant information included in the first information; and an amount of non-redundant information included in the fourth information is consistent with an amount of non-redundant information included in the third information.

In a possible implementation, the size transformation includes at least one of the following:

performing information replication and using replicated information as information on a new channel;
splitting information on at least one channel into information on a plurality of different channels; or performing a convolution operation.

In a possible implementation, the operation of splitting the information on the at least one channel into the information on the plurality of different channels is implemented by using a pixel unshuffle layer.

In a possible implementation, the first image format is a YUV444 format, and the second image format is a YUV 422 format or a YUV420 format; or

the first image format is a YUV422 format, and the second image format is a YUV420 format.

In a possible implementation, a number of channel dimensions of the second information and the fourth information is 8, a height dimension of the second information in spatial dimension is H/2, and a width dimension of the second information in spatial dimension is W/2, where H is a height dimension of a first image, and W is a width dimension of the first image.

In a possible implementation, the obtaining module 1201 is further configured to:

obtain fifth information, where the fifth information is information about a luminance component Y;
the processing module is further configured to perform size transformation on the fifth information to obtain sixth information, where a size of the sixth information in spatial dimension is consistent with that of the second information; and
the processing module is specifically configured to encode a fusion result of the second information and the fourth information by using the encoding network.

In a possible implementation, the first information or the third information further includes information about a luminance component.

Refer to FIG. 13. An embodiment of a decoding apparatus 1300 in an embodiment of this application includes the following modules.

An obtaining module 1301 is configured to: obtain first information based on a first bitstream; and obtain third information based on a second bitstream, where sizes of the third information in spatial dimension and channel dimension are consistent with those of the first information.

For a description of the obtaining module 1301, refer to the descriptions of steps 701 and 704 in the foregoing embodiment. Details are not described herein again.

A processing module 1302 is configured to: perform size transformation on the first information to obtain second information, where the second information includes information about a chrominance component in a first image format; reconstruct a first image based on the second information; obtain the third information based on the second bitstream, where the sizes of the third information in spatial dimension and channel dimension are consistent with those of the first information; perform size transformation on the third information to obtain fourth information, where the fourth information includes information about a chrominance component in a second image format, and the second image format is different from the first image format; and reconstruct a second image based on the fourth information.

For a description of the processing module 1302, refer to the descriptions of steps 702, 703, 705, and 706 in the foregoing embodiment. Details are not described herein again.

In a possible implementation, a size of the second information in spatial dimension is greater than that of the first information, a size of the second information in channel dimension is less than that of the first information, a size of the fourth information in spatial dimension is greater than or equal to that of the third information, and a size of the fourth information in channel dimension is less than that of the third information.

In a possible implementation, an amount of non-redundant information included in the second information is less than or equal to an amount of non-redundant information included in the first information; and an amount of non-redundant information included in the fourth information is less than or equal to an amount of non-redundant information included in the third information.

In a possible implementation, the size transformation includes at least one of the following manners:

deleting information of a part of channels;
combining different data of a plurality of channels onto a same channel; or
performing a convolution operation.

In a possible implementation, the operation of combining the different data of the plurality of channels onto the same channel is implemented by using a pixel shuffle layer.

In a possible implementation, the first image format is a YUV444 format, and the second image format is a YUV422 format or a YUV420 format; or
the first image format is a YUV422 format, and the second image format is a YUV420 format.

In a possible implementation, a number of channel dimensions of the first information is 8, a height dimension of the first information in spatial dimension is H/2, and a width dimension of the first information in spatial dimension is W/2, where H is a height dimension of the first image, and W is a width dimension of the first image.

In a possible implementation, an intermediate layer is a network layer before a last convolutional layer of a decoding network or a network layer before a last pixel shuffle layer of a decoding network.

In addition, an embodiment of this application further provides an image decoding apparatus. The apparatus includes:

an obtaining module, configured to obtain first information based on a first bitstream; and
a processing module, configured to perform size transformation on the first information to obtain one or more of second information, third information, or fourth information, where the second information is information about a chrominance component in a first image format, the third information is information about a chrominance component in a second image format, the fourth information is information about a chrominance component in a third image format, and the first image format, the second image format, and the third image format are different from each other.

In a possible implementation, a size of the second information in spatial dimension is greater than that of the first information, a size of the second information in channel dimension is less than that of the first information, a size of the third information in spatial dimension is greater than or equal to that of the first information, and a size of the third information in channel dimension is less than that of the first information.

In a possible implementation, an amount of non-redundant information included in the second information is less than or equal to an amount of non-redundant information included in the first information; and an amount of non-redundant information included in the third information is less than or equal to the amount of non-redundant information included in the first information.

In a possible implementation, the processing module is further configured to:
reconstruct a first image based on at least one of the second information, the third information, or the fourth information.

In a possible implementation, the size transformation includes at least one of the following manners: deleting information of a part of channels; combining different data of a plurality of channels onto a same channel; and performing a convolution operation.

In a possible implementation, the operation of combining the different data of the plurality of channels onto the same channel is implemented by using a pixel shuffle layer.

In a possible implementation, the first image format is a YUV444 format, and the second image format is a YUV422 format or a YUV420 format; or the first image format is a YUV422 format, and the second image format is a YUV420 format.

In a possible implementation, a number of channel dimensions of the first information is 8, a spatial dimension of the first information includes a height and a width, a height of the first information is H/2, and a width of the first information is W/2, where H is a height dimension of the first image, and W is a width dimension of the first image.

In a possible implementation, an intermediate layer is a network layer before a last convolutional layer of a decoding network or a network layer before a last pixel shuffle layer of a decoding network.

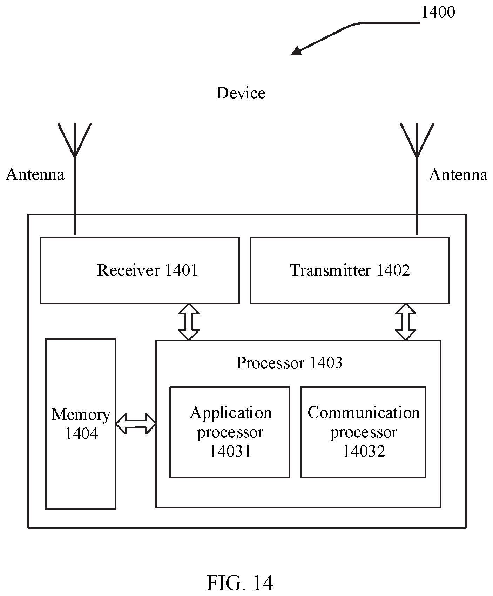

The following describes a device provided in an embodiment of this application. The device may be an encoding apparatus or a decoding apparatus. FIG. 14 is a diagram of a structure of a device according to an embodiment of this application. A device 1400 may be specifically represented as a virtual reality VR device, a mobile phone, a tablet computer, a notebook computer, an intelligent wearable device, or the like. This is not limited herein. The apparatus described in the embodiment corresponding to FIG. 12 or FIG. 13 may be deployed on the device 1400. Specifically, the device 1400 includes a receiver 1401, a transmitter 1402, a processor 1403, and a memory 1404 (there may be one or more processors 1403 in the device 1400, and an example in which there is one processor is used in FIG. 14). The processor 1403 may include an application processor 14031 and a communication processor 14032. In some embodiments of this application, the receiver 1401, the transmitter 1402, the processor 1403, and the memory 1404 may be connected to each other through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores processor and operation instructions, an executable module or a data structure, or a subset thereof, or an extended set thereof. The operation instructions may include various operation instructions for implementing various operations.

The processor 1403 controls an operation of the device. During specific application, components of the device are coupled together through a bus system. In addition to a data bus, the bus system may further include a power bus, a control bus, a status signal bus, and the like. However, for clear description, various buses are referred to as the bus system in the figure.

The methods disclosed in the foregoing embodiments of this application may be applied to the processor 1403 or may be implemented by the processor 1403. The processor 1403 may be an integrated circuit chip and has a signal processing capability. In an implementation process, steps in the foregoing methods can be implemented by using a hardware integrated logic circuit in the processor 1403, or by using instructions in a form of software. The processor 1403 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware of the processor 1403.

The receiver 1401 may be configured to: receive input digit or character information, and generate a signal input related to a related setting and function control of the device. The transmitter 1402 may be configured to output digit or character information through a first interface. The transmitter 1402 may be further configured to send instructions to a disk group through the first interface, to modify data in the disk group. The transmitter 1402 may further include a display device like a display.

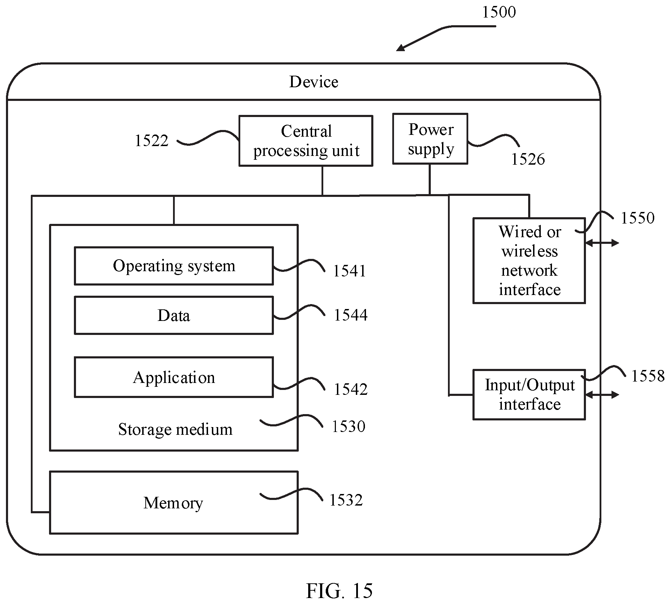

An embodiment of this application further provides a device. The device may be an encoding apparatus or a decoding apparatus. FIG. 15 is a diagram of a structure of a device according to an embodiment of this application. The apparatus described in the embodiment corresponding to FIG. 12 or FIG. 13 may be deployed on a device 1500. Specifically, the device 1500 is implemented by one or more servers. The device 1500 may vary greatly due to different configurations or performance, and may include one or more central processing units (central processing units, CPUs) 1522 (for example, one or more processors), a memory 1532, one or more storage media 1530 (for example, one or more mass storage devices) that store an application program 1542 or data 1544. The memory 1532 and the storage medium 1530 may perform transient storage or persistent storage. A program stored in the storage medium 1530 may include one or more modules (not shown in the figure), and each module may include a series of instruction operations for the device. Further, the central processing unit 1522 may be configured to communicate with the storage medium 1530, and perform, on the device 1500, a series of instruction operations in the storage medium 1530.

The device 1500 may further include one or more power supplies 1526, one or more wired or wireless network interfaces 1550, one or more input/output interfaces 1558, and/or one or more operating systems 1541, such as Windows ServerTM, Mac OS XTM, UnixTM, LinuxTM, and FreeBSDTM.

An embodiment of this application further provides a computer program product (or referred to as a computer program) that stores one or more computers. When the computer program product is executed by a processor, the processor performs the method in the possible implementations of the foregoing image processing devices.

An embodiment of this application further provides a chip system. The chip system includes at least one processor, configured to support a terminal device in implementing functions in the possible implementations of the foregoing image processing devices. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a readable storage medium. The readable medium stores a bitstream obtained through encoding according to the methods in the embodiments shown in FIG. 1a to FIG. 6.

An embodiment of this application further provides a bitstream storage device, including at least one storage medium and a communication interface. The communication interface is configured to receive or send a bitstream. The at least one storage medium is configured to store the bitstream. The bitstream is obtained by an encoder through encoding according to the methods in the embodiments shown in FIG. 1a to FIG. 6.

An embodiment of this application further provides a bitstream storage method. The method includes: receiving a bitstream through a communication interface; and storing the bitstream in one or more storage media, where the bitstream is obtained by an encoder through encoding according to the methods in the embodiments shown in FIG. 1a to FIG. 6.

An embodiment of this application further provides a bitstream distribution system. The system includes at least one storage medium and a video stream device. The at least one storage medium is configured to store a bitstream, and the bitstream is obtained by an encoder through encoding according to the methods in the embodiments shown in FIG. 1a to FIG. 6. The video stream device is configured to respond to a request of a decoder, so that a target bitstream in the at least one storage medium is sent to the decoder.

An embodiment of this application further provides a bitstream distribution method. The method includes: receiving a first request; selecting a target bitstream from at least one storage medium in response to the first request; and sending the target bitstream to a destination device. The at least one storage medium is configured to store a bitstream, and the bitstream is obtained by an encoder through encoding according to the methods in the embodiments shown in FIG. 1a to FIG. 6.

An embodiment of this application further provides a bitstream processing system. The system includes an image source device, an encoder device, one or more storage media, and a destination device. The image source device is configured to provide image data. The encoder device is configured to: obtain the image data of the image source device through an interface, and encode the image data to obtain one or more bitstreams, where the bitstream is obtained by the encoder through encoding according to the methods in the embodiments shown in FIG. 1a to FIG. 13. The encoder device is configured to store the one or more bitstreams in the one or more storage media. Alternatively, the encoder device is configured to encapsulate the one or more bitstreams to obtain a transmission bitstream. The encoder device is configured to transmit the transmission bitstream to the destination device through a communication link or a communication network. The destination device is configured to decapsulate the transmission bitstream, to obtain the one or more bitstreams. The destination device is configured to decode the one or more bitstreams to obtain decoded data.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, and may be located in one position, or may be distributed on a plurality of network units. A part or all of the units may be selected based on actual requirements to achieve the objectives of the solutions in embodiments.

In addition, it should be noted that the described apparatus embodiments are merely examples. The units described as separate parts may or may not be physically separate, and parts displayed as units may or may not be physical units, and may be located in one position, or may be distributed on a plurality of network units. A part or all of the modules may be selected based on actual requirements to achieve the objectives of the solutions in embodiments. In addition, in the accompanying drawings of the apparatus embodiments provided by this application, connection relationships between modules represent that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a device, or a network device) to perform the methods described in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, device, or data center to another website, computer, device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. An image encoding method, wherein the method comprises:

    obtaining first information, wherein the first information comprises information about a chrominance component in a first image format;
    performing size transformation on the first information to obtain second information;
    encoding the second information by using an encoding network or a part of an encoding network;
    obtaining third information, wherein the third information comprises information about a chrominance component in a second image format, and the second image format is different from the first image format;
    performing size transformation on the third information to obtain fourth information, wherein sizes of the fourth information in spatial dimension and channel dimension are consistent with those of the second information; and
    encoding the fourth information by using the encoding network or the part of the encoding network.

2. The method according to claim 1, wherein a size of the second information in spatial dimension is less than that of the first information, and a size of the second information in channel dimension is greater than that of the first information; and a size of the fourth information in spatial dimension is less than or equal to that of the third information, and a size of the fourth information in channel dimension is greater than that of the third information.

3. The method according to claim 1 or 2, wherein an amount of non-redundant information comprised in the second information is consistent with an amount of non-redundant information comprised in the first information; and an amount of non-redundant information comprised in the fourth information is consistent with an amount of non-redundant information comprised in the third information.

4. The method according to any one of claims 1 to 3, wherein the size transformation comprises at least one of the following:

    performing information replication and using replicated information as information on a new channel;
    splitting information on at least one channel into information on a plurality of different channels; or
    performing a convolution operation.

5. The method according to claim 4, wherein the operation of splitting the information on the at least one channel into the information on the plurality of different channels is implemented by using a pixel unshuffle layer.

6. The method according to any one of claims 1 to 5, wherein the first image format is a YUV444 format, and the second image format is a YUV422 format or a YUV420 format; or
the first image format is a YUV422 format, and the second image format is a YUV420 format.

7. The method according to any one of claims 1 to 6, wherein a number of channel dimensions of the second information and the fourth information is 8, the size of the second information in spatial dimension comprises a height and a width, a height of the second information is H/2, and a width of the second information is W/2, wherein H is a height of a first image, and W is a width of the first image.

8. The method according to any one of claims 1 to 7, wherein the method further comprises:

obtaining fifth information, wherein the fifth information is information about a luminance component Y;
performing size transformation on the fifth information to obtain sixth information, wherein a size of the sixth information in spatial dimension is consistent with that of the second information; and
encoding the second information by using the encoding network or the part of the encoding network comprises:
encoding a fusion result of the second information and the fourth information by using the encoding network.

9. The method according to any one of claims 1 to 8, wherein the first information or the third information further comprises information about a luminance component.

10. An image decoding method, wherein the method comprises:

obtaining first information based on a first bitstream;
performing size transformation on the first information to obtain second information, wherein the second information comprises information about a chrominance component in a first image format;
reconstructing a first image based on the second information;
obtaining third information based on a second bitstream, wherein sizes of the third information in spatial dimension and channel dimension are consistent with those of the first information;
performing size transformation on the third information to obtain fourth information, wherein the fourth information comprises information about a chrominance component in a second image format, and the second image format is different from the first image format; and
reconstructing a second image based on the fourth information.

11. The method according to claim 10, wherein the first information or the third information is an output of a decoding network or an output of an intermediate layer of a decoding network.

12. The method according to claim 10 or 11, wherein a size of the second information in spatial dimension is greater than that of the first information, a size of the second information in channel dimension is less than that of the first information, a size of the fourth information in spatial dimension is greater than or equal to that of the third information, and a size of the fourth information in channel dimension is less than that of the third information.

13. The method according to any one of claims 10 to 12, wherein the size transformation comprises at least one of the following manners:

deleting information of a part of channels;
combining different data of a plurality of channels onto a same channel; or
performing a convolution operation.

14. The method according to claim 13, wherein the operation of combining the different data of the plurality of channels onto the same channel is implemented by using a pixel shuffle layer.

15. The method according to any one of claims 10 to 14, wherein the first image format is a YUV444 format, and the second image format is a YUV422 format or a YUV420 format; or
the first image format is a YUV422 format, and the second image format is a YUV420 format.

16. The method according to any one of claims 10 to 15, wherein a number of channel dimensions of the first information is 8, a height dimension of the first information in spatial dimension is H/2, and a width dimension of the first information in spatial dimension is W/2, wherein H is a height dimension of the first image, and W is a width dimension of the first image.

17. The method according to any one of claims 10 to 16, wherein the intermediate layer is a network layer before a last convolutional layer of the decoding network or a network layer before a last pixel shuffle layer of the decoding network.

18. An image encoding apparatus, wherein the apparatus comprises:

an obtaining module, configured to: obtain first information, wherein the first information comprises information about a chrominance component in a first image format; and obtain third information, wherein the third information comprises information about a chrominance component in a second image format, and the second image format is different from the first image format; and
a processing module, configured to: perform size transformation on the first information to obtain second information; encode the second information by using an encoding network or a part of an encoding network; perform size transformation on the third information to obtain fourth information, wherein sizes of the fourth information in spatial dimension and channel dimension are consistent with those of the second information; and encode the fourth information by using the encoding network.

19. The apparatus according to claim 18, wherein a size of the second information in spatial dimension is less than that of the first information, and a size of the second information in channel dimension is greater than that of the first information; and a size of the fourth information in spatial dimension is less than or equal to that of the third information, and a size of the fourth information in channel dimension is greater than that of the third information.

20. The apparatus according to claim 18 or 19, wherein an amount of non-redundant information comprised in the second information is consistent with an amount of non-redundant information comprised in the first information; and an amount of non-redundant information comprised in the fourth information is consistent with an amount of non-redundant information comprised in the third information.

21. The apparatus according to any one of claims 18 to 20, wherein the size transformation comprises at least one of the following:

performing information replication and using replicated information as information on a new channel;
splitting information on at least one channel into information on a plurality of different channels; or
performing a convolution operation.

22. The apparatus according to claim 21, wherein the operation of splitting the information on the at least one channel into the information on the plurality of different channels is implemented by using a pixel unshuffle layer.

23. The apparatus according to any one of claims 18 to 22, wherein the first image format is a YUV444 format, and the second image format is a YUV422 format or a YUV420 format; or
the first image format is a YUV422 format, and the second image format is a YUV420 format.

24. The apparatus according to any one of claims 18 to 23, wherein a number of channel dimensions of the second information and the fourth information is 8, the size of the second information in spatial dimension comprises a height and a width, a height of the second information is H/2, and a width of the second information is W/2, wherein H is a height of a first image, and W is a width of the first image.

25. The apparatus according to any one of claims 18 to 24, wherein the obtaining module is further configured to:

obtain fifth information, wherein the fifth information is information about a luminance component Y;
the processing module is further configured to perform size transformation on the fifth information to obtain sixth information, wherein a size of the sixth information in spatial dimension is consistent with that of the second information; and
the processing module is specifically configured to encode a fusion result of the second information and the fourth information by using the encoding network.

26. The apparatus according to any one of claims 18 to 25, wherein the first information or the third information further comprises information about a luminance component.

**27.** An image decoding apparatus, wherein the apparatus comprises:

an obtaining module, configured to: obtain first information based on a first bitstream; and obtain third information based on a second bitstream, wherein sizes of the third information in spatial dimension and channel dimension are consistent with those of the first information; and
a processing module, configured to: perform size transformation on the first information to obtain second information, wherein the second information comprises information about a chrominance component in a first image format; reconstruct a first image based on the second information; perform size transformation on the third information to obtain fourth information, wherein the fourth information comprises information about a chrominance component in a second image format, and the second image format is different from the first image format; and reconstruct a second image based on the fourth information.

**28.** The apparatus according to claim 27, wherein the first information or the third information is an output of a decoding network or an output of an intermediate layer of a decoding network.

**29.** The apparatus according to claim 27 or 28, wherein a size of the second information in spatial dimension is greater than that of the first information, a size of the second information in channel dimension is less than that of the first information, a size of the fourth information in spatial dimension is greater than or equal to that of the third information, and a size of the fourth information in channel dimension is less than that of the third information.

**30.** The apparatus according to any one of claims 27 to 29, wherein the size transformation comprises at least one of the following manners:

deleting information of a part of channels;
combining different data of a plurality of channels onto a same channel; or
performing a convolution operation.

**31.** The apparatus according to claim 30, wherein the operation of combining the different data of the plurality of channels onto the same channel is implemented by using a pixel shuffle layer.

**32.** The apparatus according to any one of claims 27 to 31, wherein the first image format is a YUV444 format, and the second image format is a YUV422 format or a YUV420 format; or
the first image format is a YUV422 format, and the second image format is a YUV420 format.

**33.** The apparatus according to any one of claims 27 to 32, wherein a number of channel dimensions of the first information is 8, a height dimension of the first information in spatial dimension is H/2, and a width dimension of the first information in spatial dimension is W/2, wherein H is a height dimension of the first image, and W is a width dimension of the first image.

**34.** The apparatus according to any one of claims 27 to 33, wherein the intermediate layer is a network layer before a last convolutional layer of the decoding network or a network layer before a last pixel shuffle layer of the decoding network.

**35.** An image decoding method, wherein the method comprises:

obtaining first information based on a first bitstream;
performing size transformation on the first information to obtain one or more of second information, third information, or fourth information, wherein the second information is information about a chrominance component in a first image format, the third information is information about a chrominance component in a second image format, the fourth information is information about a chrominance component in a third image format, and the first image format, the second image format, and the third image format are different from each other; and
performing one or more of the following steps:

reconstructing a first image based on the second information;
reconstructing a second image based on the third information; or
reconstructing a third image based on the fourth information.

**36.** The method according to claim 35, wherein the first information is an output of a decoding network or an output of an intermediate layer of a decoding network.

37. The method according to claim 35 or 36, wherein a size of the second information, the third information, and the fourth information in spatial dimension is greater than or equal to that of the first information, and a size of the second information, the third information, and the fourth information in channel dimension is less than that of the first information.

38. The method according to any one of claims 35 to 37, wherein an amount of non-redundant information comprised in the second information, the third information, and the fourth information is less than or equal to an amount of non-redundant information comprised in the first information.

39. The method according to any one of claims 35 to 38, wherein the first size transformation and the second size transformation comprise at least one of the following manners:

deleting information of a part of channels;
combining different data of a plurality of channels onto a same channel; or
performing a convolution operation.

40. The method according to claim 39, wherein the operation of combining the different data of the plurality of channels onto the same channel is implemented by using a pixel shuffle layer.

41. An image decoding apparatus, wherein the apparatus comprises:

an obtaining module, configured to obtain first information based on a first bitstream; and
a processing module, configured to: perform size transformation on the first information to obtain one or more of second information, third information, or fourth information, wherein the second information is information about a chrominance component in a first image format, the third information is information about a chrominance component in a second image format, the fourth information is information about a chrominance component in a third image format, and the first image format, the second image format, and the third image format are different from each other; and perform one or more of the following steps:
reconstructing a first image based on the second information;
reconstructing a second image based on the third information; or
reconstructing a third image based on the fourth information.

42. A decoding device, comprising a processor, wherein the processor is coupled to a memory, the memory is configured to store a program or instructions, and when the program or the instructions are executed by the processor, the decoding device is enabled to perform the method according to any one of claims 10 to 17 and claims 35 to 40.

43. An encoding device, comprising a processor, wherein the processor is coupled to a memory, the memory is configured to store a program or instructions, and when the program or the instructions are executed by the processor, the encoding device is enabled to perform the method according to any one of claims 1 to 9.

44. An encoding and decoding system, wherein the encoding and decoding system comprises the decoding device according to claim 42 and/or the encoding device according to claim 43.

45. A computer-readable storage medium, wherein the medium stores instructions, and when the instructions are executed by a computer, the method according to any one of claims 1 to 17 and claims 35 to 40 is implemented.

46. A computer program product, comprising instructions, wherein when the instructions are run on a computer, the computer is enabled to perform the method according to any one of claims 1 to 17 and claims 35 to 40.

47. A readable storage medium, wherein the readable medium stores a bitstream obtained through encoding using the encoding method according to any one of claims 1 to 9.

48. A bitstream storage device, comprising at least one storage medium and a communication interface, wherein

the communication interface is configured to receive or send a bitstream;
the at least one storage medium is configured to store the bitstream; and
the bitstream is obtained by an encoder through encoding using the encoding method according to any one of claims 1 to 9.

**49.** A bitstream storage method, comprising:

receiving a bitstream through a communication interface; and
storing the bitstream in one or more storage media, wherein the bitstream is obtained by an encoder through encoding using the encoding method according to any one of claims 1 to 9.

**50.** A bitstream distribution system, comprising at least one storage medium and a video stream device, wherein

the at least one storage medium is configured to store a bitstream, and the bitstream is obtained by an encoder through encoding using the encoding method according to any one of claims 1 to 9; and
the video stream device is configured to respond to a request of a decoder, so that the bitstream in the at least one storage medium is sent to the decoder.

**51.** A bitstream distribution method, comprising:

receiving a first request;
selecting a bitstream from at least one storage medium in response to the first request; and
sending the bitstream to a destination device, wherein
the at least one storage medium is configured to store a bitstream, and the bitstream is obtained by an encoder through encoding using the encoding method according to any one of claims 1 to 9.

**52.** A bitstream processing system, comprising an image source device, an encoder device, one or more storage media, and a destination device, wherein

the image source device is configured to provide image data;
the encoder device is configured to: obtain the image data of the image source device through an interface, and encode the image data to obtain one or more bitstreams, wherein the bitstream is obtained by the encoder through encoding using the encoding method according to any one of claims 1 to 9;
the encoder device is configured to store the one or more bitstreams in the one or more storage media; or
the encoder device is configured to encapsulate the one or more bitstreams to obtain a transmission bitstream;
the encoder device is configured to transmit the transmission bitstream to the destination device through a communication link or a communication network;
the destination device is configured to decapsulate the transmission bitstream, to obtain the one or more bitstreams; and
the destination device is configured to decode the one or more bitstreams, to obtain decoded data.

| Input data | → | AI encoding unit | → | Storage/ Transmission unit | → | AI decoding unit | → | Reconstructed data |

FIG. 1a

Compression process

| Input data | → | AI encoding unit | → | File saving unit | → | File |

Decompression process

| Reconstructed data | ← | AI decoding unit | ← | File loading unit | ← | File |

FIG. 1b

Terminal | Cloud

Input data → Encoding unit → Decoding unit → AI encoding unit → Bitstream/File

Compression process

Decompression process

Reconstructed data ← Decoding unit ← Encoding unit ← AI decoding unit ← Bitstream/File

FIG. 2a

FIG. 2b

| | |
|---|---|
| Obtain first information, where the first information includes information about a chrominance component in a first image format | 301 |

↓

| | |
|---|---|
| Perform size transformation on the first information to obtain second information | 302 |

↓

| | |
|---|---|
| Encode the second information by using an encoding network or a part of an encoding network | 303 |

↓

| | |
|---|---|
| Obtain third information, where the third information includes information about a chrominance component in a second image format, and the second image format is different from the first image format | 304 |

↓

| | |
|---|---|
| Perform size transformation on the third information to obtain fourth information, where sizes of the fourth information in spatial dimension and channel dimension are consistent with those of the second information | 305 |

↓

| | |
|---|---|
| Encode the fourth information by using the encoding network or the part of the encoding network | 306 |

FIG. 3

$[4C, H/2, W/2]$     UPS     $[C, H, W]$

FIG. 4

FIG. 5

FIG. 6

Obtain first information based on a first bitstream — 701

Perform size transformation on the first information to obtain second information, where the second information includes information about a chrominance component in a first image format — 702

Reconstruct a first image based on the second information — 703

Obtain third information based on a second bitstream, where sizes of the third information in spatial dimension and channel dimension are consistent with those of the first information — 704

Perform size transformation on the third information to obtain fourth information, where the third information includes information about a chrominance component in a second image format, and the second image format is different from the first image format — 705

Reconstruct a second image based on the fourth information — 706

FIG. 7

PS

$[4C, H/2, W/2]$

$[C, H, W]$

FIG. 8a

Obtain first information based on a first bitstream — 801

Perform size transformation on the first information to obtain one or more of second information, third information, or fourth information, where the second information is information about a chrominance component in a first image format, the third information is information about a chrominance component in a second image format, the fourth information is information about a chrominance component in a third image format, and the first image format, the second image format, and the third image format are different from each other — 802

Perform one or more of the following steps: reconstructing a first image based on the second information; reconstructing a second image based on the third information; or reconstructing a third image based on the fourth information — 803

FIG. 8b

FIG. 9

FIG. 10

FIG. 11

Encoding apparatus 1200

1201

Obtaining module

1202

Processing module

FIG. 12

Decoding apparatus 1300

1301

Obtaining module

1302

Processing module

FIG. 13

FIG. 14

1500

Device

1522 — Central processing unit

Power supply — 1526

Operating system — 1541

Data — 1544

Application — 1542

Storage medium — 1530

Memory — 1532

Wired or wireless network interface — 1550

Input/Output interface — 1558

FIG. 15

## INTERNATIONAL SEARCH REPORT

| International application No. |
| --- |
| **PCT/CN2024/111331** |

**A.    CLASSIFICATION OF SUBJECT MATTER**

H04N 19/186(2014.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 编码, 解码, 译码, 神经网络, AI, NN, 色度, 色差, 颜色, UPS, 逆像素重组, 尺寸, 大小, 宽, 高, 空间, 通道, 深度, 转换, 变换, 相同, 分辨率, encode, decode, code, neural network, chroma, chrominance, pixel unshuffle, size, width, height, space, channel, depth, conversion, transform, same, resolution

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114697701 A (SYNAPTICS INCORPORATED) 01 July 2022 (2022-07-01) description, paragraphs 15-17 and 22-24, and figures 2-5 | 1-34, 42-52 |
| A | CN 116508320 A (HUAWEI TECHNOLOGIES CO., LTD.) 28 July 2023 (2023-07-28) entire document | 1-34, 42-52 |
| A | WO 2019087905 A1 (SHARP KABUSHIKI KAISHA) 09 May 2019 (2019-05-09) entire document | 1-34, 42-52 |
| A | JP 2019028888 A (JAPAN BROADCASTING CORPORATION) 21 February 2019 (2019-02-21) entire document | 1-34, 42-52 |
| A | US 2023140865 A1 (GENESYS LOGIC, INC.) 11 May 2023 (2023-05-11) entire document | 1-34, 42-52 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 November 2024** | **14 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | |
|---|---|
| International application No. | |
| | **PCT/CN2024/111331** |

---

**Box No. III   Observations where unity of invention is lacking (Continuation of item 3 of first sheet)**

This International Searching Authority found multiple inventions in this international application, as follows:

Claims (1, 10, 18, 27) and claims (35, 41) do not share a same or corresponding special technical feature, and therefore lack unity of invention and do not comply with PCT Rule 13.1, 13.2 and 13.3.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-34, 42-52**

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2024/111331**

| Patent document cited in search report | | | Publication date (day/month/year) | Patent family member(s) | | | Publication date (day/month/year) |
|---|---|---|---|---|---|---|---|
| CN | 114697701 | A | 01 July 2022 | US | 2022210213 | A1 | 30 June 2022 |
| | | | | US | 2023396665 | A1 | 07 December 2023 |
| | | | | KR | 20220097267 | A | 07 July 2022 |
| CN | 116508320 | A | 28 July 2023 | WO | 2022106014 | A1 | 27 May 2022 |
| | | | | EP | 4193595 | A1 | 14 June 2023 |
| | | | | US | 2023336736 | A1 | 19 October 2023 |
| | | | | IN | 202327011112 | A | 08 December 2023 |
| | | | | TW | 202228439 | A | 16 July 2022 |
| WO | 2019087905 | A1 | 09 May 2019 | None | | | |
| JP | 2019028888 | A | 21 February 2019 | None | | | |
| US | 2023140865 | A1 | 11 May 2023 | TW | 202320011 | A | 16 May 2023 |
| | | | | CN | 116091335 | A | 09 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311361171